(19) Europäisches Patentamt
European Patent Office
Office européen des brevets

(11)  EP 3 920 372 B1

(12)  EUROPÄISCHE PATENTSCHRIFT

(45) Veröffentlichungstag und Bekanntmachung des Hinweises auf die Patenterteilung:
11.10.2023  Patentblatt 2023/41

(21) Anmeldenummer: 21177858.4

(22) Anmeldetag: 04.06.2021

(51) Internationale Patentklassifikation (IPC):
H02J 50/10 $^{(2016.01)}$    H02K 11/01 $^{(2016.01)}$
H02J 50/70 $^{(2016.01)}$    H02K 11/042 $^{(2016.01)}$

(52) Gemeinsame Patentklassifikation (CPC):
H02K 19/16; H02J 50/005; H02J 50/10;
H02J 50/70; H02K 11/012; H02K 11/0141;
H02K 11/042; H02K 19/12; H02K 19/36

(54)  **VERFAHREN ZUR STEIGERUNG DER EFFIZIENZ EINER ENERGIEÜBERTRAGUNGSVORRICHTUNG, ENERGIEÜBERTRAGUNGSVORRICHTUNG UND VERWENDUNG EINES ELEKTRISCH LEITFÄHIGEN MATERIALS**

METHOD FOR INCREASING EFFICIENCY OF AN ENERGY TRANSMISSION DEVICE, ENERGY TRANSMISSION DEVICE AND USE OF ELECTRICALLY CONDUCTIVE MATERIAL

PROCÉDÉ D'AUGMENTATION DE L'EFFICACITÉ D'UN DISPOSITIF DE TRANSFERT D'ÉNERGIE, DISPOSITIF DE TRANSFERT D'ÉNERGIE ET UTILISATION D'UNE MATIÈRE ÉLECTROCONDUCTRICE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 04.06.2020  DE 102020206998

(43) Veröffentlichungstag der Anmeldung:
08.12.2021  Patentblatt 2021/49

(73) Patentinhaber: Universität Stuttgart
70174 Stuttgart (DE)

(72) Erfinder:
• Maier, David
Bühl (DE)

• Maier, Marcel
Stuttgart (DE)
• Parspour, Nejila
Gerlingen (DE)

(74) Vertreter: Müller-Boré & Partner
Patentanwälte PartG mbB
Friedenheimer Brücke 21
80639 München (DE)

(56) Entgegenhaltungen:
EP-A1- 3 331 128         CN-A- 110 635 576
DE-A1-102017 214 766     DE-U1- 20 204 584
US-A1- 2009 273 251

**Beschreibung**

Die Erfindung betrifft ein Verfahren zur Steigerung der Effizienz einer Energieübertragungsvorrichtung, insbesondere zur Steigerung des Wirkungsgrades einer Energieübertragungsvorrichtung und/oder zur Reduzierung der Wärmeentwicklung in einer Energieübertragungsvorrichtung. Ferner betrifft die Erfindung eine Energieübertragungsvorrichtung sowie eine Verwendung eines elektrisch leitfähigen Materials.

Für rotierende Energieübertragungsvorrichtungen, welche selbst kein Drehmoment erzeugen bzw. erzeugen können und welche z.B. in einer elektrisch erregten Synchronmaschine eingesetzt werden, sind eine große mechanische Stabilität und niedrige Temperaturen wichtige Faktoren, um einen möglichst hohen Wirkungsgrad und eine lange Lebensdauer zu erreichen. Ferner ist auch eine geringe Baugröße erwünscht. Bei einer kontaktlosen induktiven Energieübertragung besteht das Problem einer unerwünschten Wärmeentwicklung auf Grund von Wirbelströmen, welche in umliegenden elektrisch leitenden Materialen der Energieübertragungsvorrichtung induziert werden und Verluste, insbesondere im Rotor und/oder Stator der Energieübertragungsvorrichtung verursachen. Somit ist es erforderlich, eine entsprechende Kühlung der Energieübertragungsvorrichtung, beispielsweise des Rotors und/oder Stators und/oder der rotierenden Welle der Energieübertragungsvorrichtung, vorzusehen. Dies ist auch der Grund, warum grundsätzlich keine Energiequellen auf dem Rotor einer Energieübertragungsvorrichtung erwünscht sind.

Die Druckschrift EP 3 331 128 A1 offenbart eine drahtlose Energieeinspeisungseinheit, insbesondere für einen Roboterarm, wobei die drahtlose Energieeinspeisungseinheit ein Energieübertragungsmodul und ein Energieempfangsmodul umfasst. Um elektromagnetische Interferenzen zwischen Spulen zu unterdrücken, wird eine elektrisch leitfähige Abschirmplatte innerhalb eines Luftspalts zwischen magnetischen Elementen angeordnet. Als Alternative zur Anordnung einer Abschirmplatte kann auch eine Seitenwand des Luftspalts mit einer elektrisch leitfähigen Farbe beschichtet werden.

Die Druckschrift DE 202 04 584 U1 offenbart einen Übertrager für Windkraftanlagen, die einen Windrotor und einen Generator aufweisen. Der Übertrager weist einen induktiven berührungslosen Leistungsstromübertrager für die Versorgung der Verbraucher oder Aktoren am Windrotor auf und ist als Dreh- und Festübertrager ausgebildet.

Die Druckschrift DE 10 2017 214766 A1 offenbart ein Leistungsübertragungssystem zum Erzeugen eines Stroms in einer Erregerwicklung eines Rotors einer elektrischen Maschine, wobei eine sekundärseitige Wicklung zum Anordnen an dem Rotor und eine an die sekundärseitige Wicklung angeschlossene Gleichrichterschaltung zum Bereitstellen einer zwischen zwei Anschlusskontakten für die Erregerwicklung erzeugten Gleichspannung vorgesehen sind. Ferner kann vorgesehen sein, dass für eine Entwärmung des Leistungsübertragungssystems eine Gleichrichterplatine direkt mit einem Kühlkörper verbunden ist.

Die Druckschrift US 2009/273251 A1 offenbart eine Synchronmaschine mit einem Polrad und einer Statorwicklung, die für eine Erregereinrichtung erforderlich sind. Durch die Erregereinrichtung wird Energie induktiv auf das Polrad übertragen. Ferner ist eine spezielle Abschirmung gegen magnetische und elektrische Felder, die durch Ströme im Wickelkopf der Statorwicklung und durch die Rotorinduktivität erzeugt werden, vorgesehen, wodurch externe Felder der Erregervorrichtung geschwächt werden.

Die Druckschrift CN 110 635 576 A offenbart eine rotierende drahtlose Energieübertragungsvorrichtung, die einen Bürstenschleifring eines elektrischen Erregungsmotors ersetzt, wobei die Energieübertragungsvorrichtung einen Primärkreis und einen Sekundärkreis aufweist. Die Primärschaltung umfasst ein primäres Kompensationsschaltungsmodul, eine Primärspule und einen Primärspulenmagnetstreifen. Der Sekundärkreis umfasst eine Sekundärspule, einen Sekundärspulenmagnetstreifen, ein Sekundärkompensationsschaltungsmodul und ein Gleichrichtermodul.

Es ist eine Aufgabe der vorliegenden Erfindung, ein Verfahren bereitzustellen, welches die Wärmeentwicklung in einer Energieübertragungsvorrichtung reduziert. Darüber hinaus ist es eine Aufgabe der vorliegenden Erfindung eine Energieübertragungsvorrichtung mit einer reduzierten Wärmeentwicklung bereitzustellen. Diese Aufgaben werden durch die Gegenstände der nebengeordneten Ansprüche gelöst. Vorteilhafte Ausführungsformen sind Gegenstand der Unteransprüche.

Ein unabhängiger Aspekt zur Lösung der Aufgabe betrifft ein Verfahren zur Steigerung der Effizienz einer induktiven Energieübertragungsvorrichtung, mit der mit Hilfe eines Magnetfelds elektrische Energie drahtlos bzw. kontaktlos in elektrische Energie umgewandelt wird, um einen Rotor einer elektrischen Maschine elektrisch zu erregen, umfassend den Schritt:

-   Anordnen einer zusätzlichen elektrisch leitfähigen Materialschicht an zumindest einen aktiven Teil der Energieübertragungsvorrichtung, wobei ein aktiver Teil der Energieübertragungsvorrichtung ein Teil der Energieübertragungsvorrichtung ist, welcher zumindest teilweise dem zur Energieübertragung genutzten Magnetfeld ausgesetzt ist, wobei die elektrische Leitfähigkeit der zusätzlichen Materialschicht größer ist als die elektrische Leitfähigkeit des zumindest einen aktiven Teils, und wobei die angeordnete zusätzliche Materialschicht eine Schichtdicke aufweist, welche in Abhängigkeit einer vorbestimmten Frequenz des zur Energieübertragung genutzten Magnetfelds gewählt wird.

Mit "Energieübertragungsvorrichtung" wird im Rahmen der Erfindung insbesondere kein Generator oder Motor verstanden, sondern eine Vorrichtung, mit der elektrische Energie in elektrische Energie umgewandelt wird. Mit "Energieübertragungsvorrichtung" wird somit im Rahmen der Erfindung insbesondere eine Vorrichtung zur Übertragung von elektrischer Energie verstanden, welche selbst keine mechanische Arbeit verrichten und/oder kein Drehmoment erzeugen kann.

Bevorzugte Ausführungsformen der vorgenannten Aspekte werden nachfolgend angegeben.

Die Steigerung der Effizienz einer Energieübertragungsvorrichtung umfasst insbesondere eine Steigerung des Wirkungsgrades der Energieübertragungsvorrichtung und/oder eine Reduzierung der Wärmeentwicklung in der Energieübertragungsvorrichtung.

Das Anordnen einer zusätzlichen elektrisch leitfähigen Materialschicht an zumindest einen aktiven Teil der Energieübertragungsvorrichtung umfasst insbesondere ein Aufbringen einer zusätzlichen elektrisch leitfähigen Materialschicht auf zumindest einen aktiven Teil der Energieübertragungsvorrichtung. Insbesondere kann eine zusätzliche elektrisch leitfähige Materialschicht zu zumindest einem aktiven Teil der Energieübertragungsvorrichtung hinzugefügt werden.

Bei der Energieübertragungsvorrichtung kann es sich grundsätzlich um jede beliebige Energieübertragungsvorrichtung handeln, bei der mit Hilfe eines Magnetfelds Energie drahtlos, d.h. induktiv, übertragen wird. Die Energieübertragungsvorrichtung ist insbesondere eine rotierende Energieübertragungsvorrichtung bzw. ein rotierender Energieübertrager. Folglich weist die Energieübertragungsvorrichtung daher vorzugsweise einen Stator und einen Rotor auf. Beispielsweise kann die Energieübertragungsvorrichtung für einen Generator oder einen Motor verwendet werden bzw. Bestandteil eines Generators oder eines Motors sein, bei welchem Energie drahtlos mit Hilfe eines Magnetfelds, d.h. induktiv, übertragen wird. Die Energieübertragungsvorrichtung kann deshalb auch als induktive Energieübertragungsvorrichtung bezeichnet werden. Insbesondere kann die Energieübertragungsvorrichtung Teil einer elektrisch erregten Synchronmaschine sein. Die Energieübertragungsvorrichtung könnte aber z.B. auch für andere Zwecke wie z.B. für Robotergelenke eingesetzt werden. Mit anderen Worten könnte die Energieübertragungsvorrichtung einen Energieübertrager bzw. ein Teil eines Energieübertragers, z.B. für Robotergelenke, darstellen. Insbesondere wird bei dem erfindungsgemäßen Verfahren vor dem Aufbringen der zusätzlichen elektrisch leitfähigen Materialschicht die Energieübertragungsvorrichtung bereitgestellt.

Mit dem Begriff "zusätzliche elektrisch leitfähige Materialschicht" ist gemeint, dass eine elektrisch leitfähige Materialschicht zusätzlich zu den bereits vorhandenen elektrisch leitfähigen Materialien der Energieübertragungsvorrichtung verwendet wird. Eine Energieübertragungsvorrichtung umfasst eine Vielzahl von elektrisch leitfähigen Komponenten bzw. Materialien, welche für die bestimmungsgemäße Funktion der Energieübertragungsvorrichtung eingesetzt werden bzw. notwendig sind. Beispielsweise umfasst der Stator, Rotor oder eine Welle der Energieübertragungsvorrichtung elektrisch leitfähige Materialien, welche die prinzipielle Funktion der Energieübertragungsvorrichtung, nämlich Energie zu übertragen, ermöglichen. Eine "zusätzliche elektrisch leitfähige Materialschicht" im Sinne der vorliegenden Erfindung gehört jedoch nicht zu den für den grundsätzlichen Betrieb der Energieübertragungsvorrichtung vorgesehenen bzw. erforderlichen Materialien. Die "zusätzliche elektrisch leitfähige Materialschicht" stellt neben den bereits vorhandenen elektrisch leitfähigen Materialien der Energieübertragungsvorrichtung vielmehr eine zusätzliche Komponente dar, welche für den Betrieb nicht unbedingt erforderlich ist, aber eine Wärmeentwicklung beim Betrieb der Energieübertragungsvorrichtung reduzieren und den Wirkungsgrad der Energieübertragungsvorrichtung steigern kann.

Mit dem Begriff "aktiver Teil" (auch "aktive Komponente" oder "aktiver Bereich") der Energieübertragungsvorrichtung wird ein Teil, eine Komponente oder ein Bereich der Energieübertragungsvorrichtung verstanden, welcher/welche zumindest teilweise dem zur Energieübertragung genutzten Magnetfeld ausgesetzt ist. Insbesondere wird damit ein Teil, eine Komponente oder ein Bereich der Energieübertragungsvorrichtung verstanden, welcher/welche einer durch das zur Energieübertragung genutzte Magnetfeld bewirkten Magnetfeldstärke bzw. magnetischen Flussdichte ausgesetzt ist, die mindestens noch 1 %, vorzugsweise mindestens noch 0,1 % und besonders bevorzugt mindestens noch 0,01% der vom zur Energieübertragung genutzten Magnetfeld erzeugten Magnetfeldstärke bzw. magnetischen Flussdichte beträgt. Mit anderen Worten ist ein aktiver Teil der Energieübertragungsvorrichtung im Sinne der vorliegenden Beschreibung insbesondere ein Teil, eine Komponente oder ein Bereich der Energieübertragungsvorrichtung, welcher/welche dem zur Energieübertragung genutzten Magnetfeld noch mindestens zu 1%, vorzugsweise mindestens noch zu 0,1% und besonders bevorzugt mindestens noch zu 0,01%, ausgesetzt ist. Ein aktiver Teil ist insbesondere ein Teil, eine Komponente oder ein Bereich der Energieübertragungsvorrichtung, welcher/welche sich an einer Stelle der Energieübertragungsvorrichtung befindet, an der noch mehr als 1%, vorzugsweise mehr als 0,1% und besonders bevorzugt mehr als 0,01% des Maximalwertes der im System bzw. der Energieübertragungsvorrichtung vorhandenen magnetischen Flussdichte vorhanden ist. Die obigen Werte beziehen sich auf die magnetische Flussdichte, welche von den Spulen der Energieübertragungsvorrichtung in einem Luftraum ohne metallische Komponenten erzeugt wird bzw. gemessen werden kann.

Die zusätzliche elektrisch leitfähige Materialschicht kann z.B. vollständig oder teilweise aus Kupfer mit einer elektrischen Leitfähigkeit von $58 \cdot 10^6$ S/m, und/oder Silber mit einer elektrischen Leitfähigkeit von $61 \cdot 10^6$ S/m und/oder Gold mit einer elektrischen Leitfähigkeit von $45 \cdot 10^6$ S/m ausgebildet sein. Alternativ oder zusätzlich könnte z.B. auch Graphen mit einer elektrischen Leitfähigkeit von $100 \cdot 10^6$ S/m für die zusätzliche elektrisch leitfähige Materialschicht verwendet werden.

Da Kupfer und Silber keine ausreichende mechanische Stabilität aufweisen, um z.B. als Basismaterial für eine Welle einer elektrisch erregten Synchronmaschine eingesetzt zu werden, und auch aus Kostengründen, ist es vorteilhaft bzw. erforderlich, insbesondere die unter einer gewissen Belastung stehenden Teile bzw. Komponenten einer rotierenden Energieübertragungsvorrichtung aus einem stabileren und günstigerem Material, wie z.B. Stahl, auszubilden. Stahl hat im Vergleich zu Kuper oder Silber nur eine geringe elektrische Leitfähigkeit (Stahl C35 hat z.B. eine elektrische Leitfähigkeit von $8{,}6 \cdot 10^6$ S/m).

Im Rahmen der vorliegenden Erfindung wurde erkannt, dass sich die bei einer rotierenden Energieübertragungsvorrichtung verwendeten Materialien (z.B. für den Stator, Rotor und/oder der Welle), die dem für die Energieübertragung erzeugten Magnetfeld ausgesetzt sind, durch in diesen Materialien auf Grund des Magnetfeldes induzierten Wirbelströme stark erwärmen können. Zudem entstehen dadurch Verluste, die den Wirkungsgrad der Energieübertragungsvorrichtung mindern. Das Ausmaß der Erwärmung in einem Material hängt dabei insbesondere von der elektrischen Leitfähigkeit des Materials ab. Für Materialen mit einer relativ geringen elektrischen Leitfähigkeit wie z.B. Stahl ist die Erwärmung in der Regel höher als für Materialen mit einer größeren elektrischen Leitfähigkeit wie z.B. Kupfer oder Silber.

Um eine Erwärmung bzw. Wärmeentwicklung zu reduzieren, wird erfindungsgemäß eine zusätzliche hochleitfähige Materialschicht an ein weniger leitfähiges Material der Energieübertragungsvorrichtung, welches dem zur Energieübertragung erzeugten Magnetfeld ausgesetzt ist, angeordnet oder darauf aufgebracht. Auf Grund des sogenannten Skin-Effekts kann dadurch vorteilhafterweise erreicht werden, dass das für die Energieübertragung verwendete Magnetfeld bzw. magnetische Wechselfeld weniger weit in den Materialverbund eindringt. Denn die sogenannte Eindringtiefe $\delta$ des Magnetfeldes und damit auch der durch das Magnetfeld induzierten Wirbelströme in das Material ist umso kleiner, je kleiner der spezifische elektrische Widerstand, d.h. je größer die elektrische Leitfähigkeit, des Materials ist. Dies wird weiter unten noch näher erläutert. Insbesondere kann somit erreicht werden, dass Wirbelströme hauptsächlich oder ausschließlich in der zusätzlich angeordneten elektrisch hochleitfähigen Materialschicht entstehen, was vorteilhafterweise ferner dazu beiträgt, dass eine Erwärmung des Materialverbunds durch die Wirbelströme reduziert wird. Unter "Materialverbund" wird ein Verbund bzw. eine Kombination aus dem Material, auf das die zusätzliche elektrisch leitfähige Materialschicht aufgebracht ist, und der zusätzlichen elektrisch leitfähigen Materialschicht verstanden.

Wirbelströme entstehen bei großen Frequenzen nur an der Oberfläche des Materials. Wie weit ein magnetisches Wechselfeld in ein elektrisch leitfähiges Material eindringt und damit Wirbelströme verursacht, ist durch die Eindringtiefe $\delta$ gegeben (Skin-Effekt). Die Eindringtiefe $\delta$ berechnet sich für Rundleiter vereinfacht wie folgt:

$$\delta = \sqrt{\frac{2\rho}{\omega\mu}} \ ,$$

wobei $\rho$ der spezifische Widerstand des Leiters, $\omega$ die Kreisfrequenz des Magnetfelds und $\mu$ die absolute Permeabilität des Leiters sind. Die Eindringtiefe ist somit materialals auch frequenzabhängig. Bei technisch sinnvollen Aufbauten (große mechanische Stabilität) und hohen Frequenzen ist das bei einer Energieübertragungsvorrichtung verwendete Material grundsätzlich dicker als die Eindringtiefe $\delta$ und elektrisch leitfähig (z.B. Stahlwelle). Weiterhin ist es auf Grund des Bestrebens, die Baugröße gering zu halten, in der Regel nicht möglich, den Abstand des magnetischen Feldes zum elektrisch leitenden Material so groß zu wählen, dass die Feldstärke und somit die Stärke des Wirbelstromes vernachlässigbar sind. Folglich können in Systemen mit geringer Baugröße Wirbelströme nicht vermieden werden. Mit der vorliegenden Erfindung kann jedoch erreicht werden, dass die Wirbelströme zum einen möglichst wenig in das Material eindringen und zum anderen hauptsächlich oder ausschließlich in der zusätzlich angeordneten Materialschicht entstehen, was eine Erwärmung und damit auch etwaige Energie- bzw. Leistungsverluste reduziert. Folglich kann auch der Wirkungsgrad der Energieübertragungsvorrichtung gesteigert werden.

Folgende Tabelle zeigt ein Beispiel für den Zusammenhang vom Abfall des Strombelags und der Eindringtiefe (Abfall auf 1/e, d.h. auf ca. 37%) bei verschiedenen Frequenzen bei einem runden Kupferleiter:

| Frequenz | Eindringtiefe | Frequenz | Eindringtiefe |
|---|---|---|---|
| 5 Hz | 29,7 mm | 5 MHz | 29,7 µm |
| 16 Hz | 16,6 mm | 16 MHz | 16,6 µm |
| 50 Hz | 9,38 mm | 50 MHz | 9,38 µm |

(fortgesetzt)

| Frequenz | Eindringtiefe | Frequenz | Eindringtiefe |
|---|---|---|---|
| 160 Hz | 5,24 mm | 160 MHz | 5,24 $\mu$m |
| 500 Hz | 2,97 mm | 500 MHz | 2,97 $\mu$m |
| 1,6 kHz | 1,66 mm | 1,6 GHz | 1,66 $\mu$m |
| 5 kHz | 938 $\mu$m | 5 GHz | 938 nm |
| 16 kHz | 524 $\mu$m | 16 GHz | 524 nm |
| 50 kHz | 297 $\mu$m | 50 GHz | 297 nm |
| 160 kHz | 166 $\mu$m | 160 GHz | 166 nm |
| 500 kHz | 93,8 $\mu$m | 500 GHz | 93,8 nm |
| 1,6 MHz | 52,4 $\mu$m | 1,6 GHz | 52,4 nm |

Typische Betriebsfrequenzen für die kontaktlose induktive Energieübertragung liegen im Bereich von 50-500 kHz, was einer Eindringtiefe bei Kupfer von 297-93 $\mu$m entspricht. Die Entwicklung in der Leistungselektronik erlaubt mittlerweile höhere Frequenzen, so dass im Folgenden eine Frequenz von 500 kHz betrachtet wird. Weiterhin kann auch das Spulensystem auf eine höhere Frequenz optimiert werden, und damit können zusätzlich die Baugrößen von Spule und Kondensator verkleinert werden. Bei einer mit einer höheren Frequenz verbundenen kleineren Eindringtiefe $\delta$ wirkt sich die vorliegende Erfindung noch vorteilhafter aus.

Mögliche Anwendungsbereiche der vorliegenden Erfindung sind beispielsweise rotierende Energieübertragungssysteme wie z. B. induktiv versorgte elektrisch erregte Synchronmaschinen, insbesondere in der Elektromobilität und der Robotertechnik (z.B. Robotergelenke).

In einer bevorzugten Ausführungsform ist der zumindest eine aktive Teil der Energieübertragungsvorrichtung ein Bestandteil einer stationären Primärseite bzw. eines Stators der Energieübertragungsvorrichtung. Alternativ oder zusätzlich ist der zumindest eine aktive Teil der Energieübertragungsvorrichtung ein Bestandteil einer rotierbaren und/oder rotierenden Sekundärseite bzw. eines Rotors der Energieübertragungsvorrichtung. Mit anderen Worten umfasst der zumindest eine aktive Teil der Energieübertragungsvorrichtung einen Stator und/oder einen Rotor der Energieübertragungsvorrichtung. Insbesondere ist der zumindest eine aktive Teil der Energieübertragungsvorrichtung ein Stator und/oder ein Rotor der Energieübertragungsvorrichtung. Mit dem Begriff Stator der Energieübertragungsvorrichtung wird im Rahmen dieser Erfindung insbesondere eine stationäre Primärseite der Energieübertragungsvorrichtung verstanden. Mit dem Begriff Rotor der Energieübertragungsvorrichtung wird im Rahmen dieser Erfindung insbesondere eine rotierbare bzw. rotierende Sekundärseite der Energieübertragungsvorrichtung verstanden. Insbesondere ist die Sekundärseite (bzw. der Rotor) der Energieübertragungsvorrichtung um die stationäre Primärseite (bzw. den Stator) rotierbar.

In einer weiteren bevorzugten Ausführungsform umfasst der zumindest eine aktive Teil der Energieübertragungsvorrichtung eine Welle bzw. Rotorwelle und/oder einen Kühlkörper und/oder ein Ferritplättchen und/oder ein Gehäuse und/oder eine Ferritscheibe und/oder einen Deckel und/oder eine Statorwicklung und/oder eine Rotorwicklung der Energieübertragungsvorrichtung. Insbesondere ist der zumindest eine aktive Teil der Energieübertragungsvorrichtung eine Welle bzw. Rotorwelle und/oder ein Kühlkörper und/oder ein Ferritplättchen und/oder ein Gehäuse und/oder eine Ferritscheibe und/oder ein Deckel und/oder eine Statorwicklung und/oder eine Rotorwicklung der Energieübertragungsvorrichtung. Die Welle bzw. Rotorwelle kann z.B. eine Stahlwelle sein.

Die Schichtdicke der angeordneten zusätzlichen Materialschicht wird in Abhängigkeit einer vorbestimmten Frequenz des zur Energieübertragung genutzten Magnetfelds bzw. der damit verbundenen magnetischen Flussdichte gewählt. Die vorbestimmte Frequenz entspricht insbesondere der Betriebsfrequenz, bei der die Energieübertragungsvorrichtung betrieben wird bzw. vorgesehen ist, betrieben zu werden. Auf diese Weise kann die Eindringtiefe des Magnetfelds und damit die Eindringtiefe von durch das Magnetfeld induzierten Wirbelströmen derart abgestimmt werden, dass die Wirbelströme hauptsächlich oder ausschließlich in der angeordneten zusätzlichen Materialschicht entstehen, d.h. nur zu einem geringen Teil oder gar nicht in die aktiven Teile der Energieübertragungsvorrichtung eindringen. Vorzugsweise wird die Schichtdicke der zusätzlichen elektrisch leitfähigen Materialschicht derart gewählt, dass im Bereich der angeordneten zusätzlichen Materialschicht mindestens 60%, insbesondere 63%, der durch das zur Energieübertragung genutzte Magnetfeld induzierten Wirbelströme in der zusätzlichen Materialschicht gebildet werden bzw. auftreten. Mehr bevorzugt wird die Schichtdicke der zusätzlichen elektrisch leitfähigen Materialschicht derart gewählt, dass im Bereich der angeordneten zusätzlichen Materialschicht durch das zur Energieübertragung genutzte Magnetfeld induzierte Wirbelströme zu mindestens 70%, noch mehr bevorzugt zu mindestens 80%, noch mehr bevorzugt zu mindestens 90%, am meisten bevorzugt zu mindestens 95% und insbesondere zu mindestens 99% in der zusätzlichen Materialschicht gebildet werden bzw. auftreten. Im Umkehrschluss bedeutet dies, dass der Anteil der durch das Magnetfeld erzeugten Wirbelströme im aktiven Teil der Energieübertragungsvorrichtung, d.h. in den Materialien, an denen das zusätzliche elektrisch leitfähige Material angeordnet bzw. aufgebracht wurde, maximal 40%, bevorzugt maximal 20%, noch mehr bevorzugt maximal 10% und am meisten bevorzugt maximal 5% beträgt.

In einer weiteren bevorzugten Ausführungsform entspricht die Schichtdicke der angeordneten zusätzlichen Materialschicht mindestens einer durch den Skin-Effekt bedingten bzw. in Folge des Skin-Effekts bewirkten Eindringtiefe in das Material der zusätzlichen Materialschicht bei einer vorgegebenen Frequenz des zur Energieübertragung genutzten Magnetfelds. Die vorgegebene Frequenz entspricht insbesondere der Betriebsfrequenz, bei der die Energieübertragungsvorrichtung betrieben wird bzw. vorgesehen ist, betrieben zu werden. Insbesondere beträgt die Schichtdicke der angeordneten zusätzlichen Materialschicht mindestens das Zweifache, z.B. das Drei- bis Fünffache, oder z.B. mindestens das Dreifache, mindestens das Vierfache oder mindestens das Fünffache, der durch den Skin-Effekt bedingten bzw. in Folge des Skin-Effekts bewirkten Eindringtiefe in das Material der zusätzlichen Materialschicht bei einer vorgegebenen Frequenz des zur Energieübertragung genutzten Magnetfelds. Bei einer Materialdicke, die der durch den Skin-Effekt bewirkten Eindringtiefe entspricht, sind 1-1/e^1 = 63% der erzeugten Wirbelströme im zusätzlichen hochleitenden Material enthalten. Bei einer Schichtdicke, die dem fünffachen der durch den Skin-Effekt bewirkten Eindringtiefe entspricht, sind 1-1/e^5 = 99.33%, also ca. 99% der erzeugten Wirbelströme im zusätzlichen hochleitenden Material enthalten. Auf diese Weise werden etwaige Verluste vorteilhafterweise hauptsächlich oder nur noch im zusätzlichen hochleitenden Material erzeugt.

In einer weiteren bevorzugten Ausführungsform weist die zusätzliche elektrisch leitfähige Materialschicht eine relative Permeabilität $\mu_r$ von ungefähr 1 auf. Mit anderen Worten weist die zusätzliche elektrisch leitfähige Materialschicht keine steigernde magnetische Leitfähigkeit auf. Im Rahmen der vorliegenden Erfindung wurde erkannt, dass auf diese Weise etwaige Wirbelstromverluste gering gehalten bzw. minimiert werden können. Diese Erkenntnis geht aus folgender Überlegung hervor:

Unter der Annahme, dass die Materialdicke $d_M$ viel größer als die Eindringtiefe $\delta$ ist (also $d_M \gg \delta$), ist der im Material hervorgerufene Wirbelstrom $I_W$ im Wesentlichen konstant und entspricht z.B. dem Produkt $N \cdot I$ aus Windungszahl $N$ und Strom $I$ einer den Wirbelstrom verursachenden Spule. Ist die Materialdicke $d_M$ viel kleiner als die Eindringtiefe $\delta$ ($d_M \ll \delta$), so durchdringt der magnetische Fluss das Material vollständig und die induzierte Spannung $U_i$ ist nur von der Frequenz $\omega$ abhängig, mit $U_i \sim \omega$. Für $d_M \gg \delta$ können die Wirbelstromverluste $P_V$ wie folgt angegeben werden:

$$P_V = I_W{}^2 \cdot R_{M,eff} \,, \quad \text{mit} \quad R_{M,eff} \sim \frac{\rho}{\delta}$$

$$P_V \sim \sqrt{\mu \cdot \omega \cdot \rho} \,.$$

Und für $d_M \ll \delta$ können die Wirbelstromverluste $P_V$ wie folgt angegeben werden:

$$P_V = \frac{U_i{}^2}{R_{M,eff}} \,, \quad \text{mit} \quad R_{M,eff} \sim \frac{\rho}{d_M}$$

$$P_V \sim \frac{\omega^2}{\rho} \,.$$

Folglich können, insbesondere für den in der Praxis vorliegenden Fall $d_M \gg \delta$, die Wirbelstromverluste gering gehalten werden, wenn die zusätzliche elektrisch leitfähige Materialschicht keine steigernde magnetische Leitfähigkeit aufweist, d.h. wenn die absolute magnetische Permeabilität $\mu = \mu_r \cdot \mu_0$ im Wesentlichen der magnetischen Feldkonstante $\mu_0$ entspricht und damit die relative Permeabilität $\mu_r$ der zusätzlichen leitfähigen Materialschicht ungefähr 1 ist.

Alternativ oder zusätzlich wird die zusätzliche elektrisch leitfähige Materialschicht an ein nichtleitendes Material des zumindest einen aktiven Teils angeordnet bzw. darauf aufgebracht, welches in einem Bereich der Energieübertragungsvorrichtung angeordnet ist, der zu einem Aussenbereich der Energieübertragungsvorrichtung gegenüber dem für die Energieübertragung genutzten Magnetfeld abzuschirmen ist.

In einer weiteren bevorzugten Ausführungsform wird eine, insbesondere freiliegende, Oberfläche der angeordneten zusätzlichen Materialschicht poliert. Eine polierte Oberfläche sorgt für einen kürzeren Weg, auf dem sich der Wirbelstrom ausbreitet. Folglich kann ein solches Polieren vorteilhafterweise einer Wärmeentwicklung weiter entgegenwirken.

In einer weiteren bevorzugten Ausführungsform erfolgt das Aufbringen der zusätzlichen elektrisch leitfähigen Materialschicht auf den zumindest einen aktiven Teil der Energieübertragungsvorrichtung durch Pressen und/oder Schweißen und/oder Schrumpfen und/oder Galvanisieren.

In einer weiteren bevorzugten Ausführungsform umfasst der zumindest eine aktive Teil ein Magnetflussführungselement mit einem Ferrit-Polymer-Verbundwerkstoff, wobei die zusätzliche elektrisch leitfähige Materialschicht direkt an das Magnetflussführungselement angeordnet wird.

In einer weiteren bevorzugten Ausführungsform ist die zusätzliche elektrisch leitfähige Materialschicht von dem zumindest einen aktiven Teil isoliert. Alternativ oder zusätzlich ist die zusätzliche elektrisch leitfähige Materialschicht von der elektrischen Maschine elektrisch isoliert. Insbesondere muss die zusätzliche elektrisch leitfähige Materialschicht in der Energieübertragungsvorrichtung elektrisch nicht mit einem aktiven Teil leitend verbunden sein. Mit anderen Worten kann die zusätzliche elektrisch leitfähige Materialschicht elektrisch isoliert von dem zumindest einem aktiven Teil und/oder gegenüber der elektrischen Maschine bzw. gegenüber Komponenten (insbesondere sämtlichen Komponenten) der elektrischen Maschine sein.

In einer weiteren bevorzugten Ausführungsform weist die zusätzliche elektrisch leitfähige Materialschicht eine Schichtdicke auf, so dass die zusätzliche elektrisch leitfähige Materialschicht, insbesondere ausschließlich, ein hochfrequentes intrinsisches Magnetfeld der Energieübertragungsvorrichtung schirmt. Alternativ oder zusätzlich weist die zusätzliche elektrisch leitfähige Materialschicht eine Schichtdicke auf, so dass die zusätzliche elektrisch leitfähige Materialschicht bezüglich eines extrinsischen Magnetfelds der elektrischen Maschine keine Wirkung hat. Mit anderen Worten ist die zusätzliche elektrisch leitfähige Materialschicht in ihrer Schichtdicke innerhalb der Energieübertragungsvorrichtung so ausgeprägt, dass die zusätzliche elektrisch leitfähige Materialschicht lediglich das hochfrequente intrinsische Magnetfeld der Energieübertragungsvorrichtung schirmt und/oder für das extrinsische Magnetfeld der elektrischen Maschine, insbesondere aufgrund einer veränderten Eindringtiefe, keine Wirkung zeigt. Dies kann insbesondere deshalb der Fall sein, weil der zumindest eine äußerlich angeordnete aktive Teil eine Schirmungswirkung gegenüber dem extrinsischen Feld der elektrischen Maschine aufweist, und/oder das extrinsische elektrische Feld derart niederfrequent ist, dass es die Materialien in der Energieübertragungsvorrichtung, einschließlich die zusätzliche elektrisch leitfähige Materialschicht, aufgrund der Eindringtiefe vollständig durchsetzt.

Ein weiterer unabhängiger Aspekt zur Lösung der Aufgabe betrifft eine induktive Energieübertragungsvorrichtung zur drahtlosen bzw. kontaktlosen Umwandlung von elektrischer Energie in elektrische Energie mit Hilfe eines Magnetfelds, um einen Rotor einer elektrischen Maschine elektrisch zu erregen, wobei

an zumindest einen aktiven Teil der Energieübertragungsvorrichtung eine zusätzliche elektrisch leitfähige Materialschicht angeordnet ist, wobei ein aktiver Teil der Energieübertragungsvorrichtung ein Teil der Energieübertragungsvorrichtung ist, welcher zumindest teilweise dem zur Energieübertragung genutzten Magnetfeld ausgesetzt ist, wobei die elektrische Leitfähigkeit der zusätzlichen Materialschicht größer ist als die elektrische Leitfähigkeit des zumindest einen aktiven Teils, und wobei die angeordnete zusätzliche Materialschicht eine Schichtdicke aufweist, welche in Abhängigkeit einer vorbestimmten Frequenz des zur Energieübertragung genutzten Magnetfelds gewählt ist.

Die Energieübertragungsvorrichtung kann ferner zumindest eine Elektronikeinrichtung (insbesondere umfassend eine primärseitige und/oder sekundärseitige Elektronikeinrichtung) umfassen. Die Elektronikeinrichtung umfasst insbesondere zumindest eine Kompensationseinheit, einen Wechselrichter und/oder einen Gleichrichter.

Vorzugsweise umfasst die Energieübertragungsvorrichtung eine primärseitige Elektronikeinrichtung mit einem Wechselrichter (insbesondere einphasig) und/oder eine sekundärseitige Elektronikeinrichtung mit einem Gleichrichter. Die primärseitige Elektronikeinrichtung weist ferner vorzugsweise eine primärseitige Kompensationseinheit, insbesondere eine primärseitige Blindleistungskompensationseinheit, auf. Die sekundärseitige Elektronikeinrichtung weist ferner vorzugsweise eine sekundärseitige Kompensationseinheit, insbesondere eine sekundäre Blindleistungskompensationseinheit, auf. Die sekundärseitige Elektronikeinrichtung ist vorzugsweise ausgelegt, um an und/oder außerhalb einer Maschinen-Rotorwelle angeordnet zu werden. Insbesondere ist die sekundärseitige Elektronikeinrichtung an und/oder außerhalb einer Maschinen-Rotorwelle angeordnet. Beispielsweise kann die sekundärseitige Elektronikeinrichtung ausgelegt sein, um im Bereich eines Lagers der Maschinen-Rotorwelle und/oder im Bereich der Erregerwicklung eines Maschinen-Rotors angeordnet zu werden. Insbesondere ist die sekundärseitige Elektronikeinrichtung im Bereich eines Lagers der Maschinen-Rotorwelle und/oder im Bereich der Erregerwicklung eines Maschinen-Rotors angeordnet.

Die Energieübertragungsvorrichtung weist insbesondere eine Rotorwicklung bzw. Rotorspule und eine Statorwicklung bzw. Statorspule auf. Die Rotorspule und Statorspule sind insbesondere drehbar zueinander angeordnet. Insbesondere sind die Rotorspule und Statorspule derart relativ zueinander angeordnet, dass bei einer Drehbewegung der Spulen relativ zueinander kein Strom induziert wird. Sowohl die Rotorspule als auch die Statorspule kann jeweils eine Primärspule oder eine Sekundärspule sein. Um Strom in der Sekundärspule zu erzeugen, wird an der Primärspule eine Wechselspannung angelegt. Eine relative Rotation zwischen der Primärspule und der Sekundärspule ist dagegen nicht notwendig. Insbesondere können die Primär- und Sekundärspule zylindrisch ausgebildet und/oder zylindrisch zueinander angeordnet sein.

Die Energieübertragungsvorrichtung kann insbesondere ein Spulensystem umfassen, wobei eine Spule des Spulensystems einer Primärseite bzw. einem Primärsystem der Energieübertragungsvorrichtung und eine weitere Spule des Spulensystems einer Sekundärseite bzw. einem Sekundärsystem der Energieübertragungsvorrichtung angehört. Das Primärsystem kann eine Spannungsquelle, einen Wechselrichter und eine primärseitige Kompensationseinheit umfassen. Das Sekundärsystem kann eine sekundärseitige Kompensationseinheit und einen Gleichrichter umfassen. Insbesondere können der Wechselrichter und die primärseitige Kompensationseinheit eine primärseitige Elektronikeinrichtung bilden. Auch eine Energie- bzw. Spannungsquelle kann Bestandteil der primärseitigen Elektronikeinrichtung sein. Ferner können die sekundärseitige Kompensationseinheit und der Gleichrichter eine sekundärseitige Elektronikeinrichtung bilden.

Eine Kompensation kann durch verschiedene Kompensationsschaltungen, wie z.B. durch eine serielle Schaltung, eine parallele Schaltung, eine LC-Schaltung oder eine LCC-Schaltung, realisiert werden. Vorzugsweise wird für die Energieübertragungsvorrichtung eine resonante Schaltung verwendet, welche primärseitig seriell und sekundärseitig parallel kompensiert ist. In einer weiteren Ausführungsform kann die Schaltung primärseitig seriell und sekundärseitig unkompensiert sein. Und in einer weiteren Ausführungsform kann die Schaltung nicht resonant und beidseitig unkompensiert sein.

Bevorzugte Ausführungsformen der vorgenannten Aspekte werden nachfolgend angegeben.

In einer bevorzugten Ausführungsform weist die Energieübertragungsvorrichtung einen Stator und einen Rotor auf, wobei der zumindest eine aktive Teil der Energieübertragungsvorrichtung ein Bestandteil des Stators und/oder Rotors ist.

In einer weiteren bevorzugten Ausführungsform umfasst bzw. ist der zumindest eine aktive Teil der Energieübertragungsvorrichtung eine Rotorwelle, insbesondere eine Stahlwelle, und/oder eine Statorwicklung.

In einer weiteren bevorzugten Ausführungsform ist die Schichtdicke der angeordneten zusätzlichen Materialschicht in Abhängigkeit einer vorbestimmten Frequenz des zur Energieübertragung genutzten Magnetfelds gewählt.

In einer weiteren bevorzugten Ausführungsform ist die Schichtdicke der zusätzlichen Materialschicht derart gewählt, dass Wirbelströme durch das Magnetfeld im Wesentlichen nur bzw. ausschließlich in der zusätzlichen Materialschicht, und nicht in der aktiven Komponente, gebildet werden.

In einer weiteren bevorzugten Ausführungsform ist eine, insbesondere freiliegende, Oberfläche der angeordneten zusätzlichen Materialschicht poliert.

In einer weiteren bevorzugten Ausführungsform ist die erfindungsgemäße Energieübertragungsvorrichtung eine Vorrichtung zur Umwandlung von elektrischer Energie in elektrische Energie, wobei die Umwandlung insbesondere über einen Luftspalt erfolgt. Die erfindungsgemäße Energieübertragungsvorrichtung kann z.B. ein Bestandteil einer elektrisch erregten Synchronmaschine sein. Insbesondere kann die erfindungsgemäße Energieübertragungsvorrichtung zur elektrischen Erregung einer elektrisch erregten Synchronmaschine verwendet werden. Insbesondere kann die Energieübertragungsvorrichtung ein herkömmliches Schleifringsystem der Synchronmaschine, welches zur Erregung des Rotors der Synchronmaschine dient, ersetzen. Ähnlich wie der Schleifring kann die Energieübertragungsvorrichtung zur Bestromung bzw. Erregung der Rotorwicklung der Synchronmaschine dienen. Insbesondere betrifft die vorliegende Erfindung eine Verwendung der erfindungsgemäßen Energieübertragungsvorrichtung zur elektrischen Erregung einer elektrisch erregten Synchronmaschine. Ferner wird im Rahmen der vorliegenden Erfindung insbesondere eine Synchronmaschine, welche die erfindungsgemäße Energieübertragungsvorrichtung umfasst, bereitgestellt.

In einer weiteren bevorzugten Ausführungsform umfasst der zumindest eine aktive Teil ein Magnetflussführungselement mit einem Ferrit-Polymer-Verbundwerkstoff, wobei die zusätzliche elektrisch leitfähige Materialschicht direkt an das Magnetflussführungselement angeordnet wird.

Ein weiterer unabhängiger Aspekt zur Lösung der Aufgabe betrifft die Verwendung eines elektrisch leitfähigen Materials in einer induktiven Energieübertragungsvorrichtung, mit der mit Hilfe eines Magnetfelds elektrische Energie drahtlos bzw. kontaktlos in elektrische Energie übertragen wird, um einen Rotor (insbesondere einer elektrischen Maschine) elektrisch zu erregen, dadurch gekennzeichnet, dass

das elektrisch leitfähige Material als zusätzliche Materialschicht an zumindest einen aktiven Teil der Energieübertragungsvorrichtung angeordnet wird, wobei ein aktiver Teil der Energieübertragungsvorrichtung ein Teil der Energieübertragungsvorrichtung ist, welcher zumindest teilweise dem zur Energieübertragung genutzten Magnetfeld ausgesetzt ist, wobei die elektrische Leitfähigkeit des zusätzlich aufgebrachten elektrisch leitfähigen Materials größer ist als die elektrische Leitfähigkeit des zumindest einen aktiven Teils, und wobei die angeordnete zusätzliche Materialschicht eine Schichtdicke aufweist, welche in Abhängigkeit einer vorbestimmten Frequenz des zur Energieübertragung genutzten Magnetfelds gewählt wird.

Beispielsweise kann Kupfer oder Silber als elektrisch leitfähiges Material in einer Energieübertragungsvorrichtung verwendet werden, mit der mit Hilfe eines Magnetfelds Energie drahtlos übertragen wird. Das elektrisch leitfähige Material wird als zusätzliche Materialschicht an zumindest einen aktiven Teil der Energieübertragungsvorrichtung angeordnet und/oder auf zumindest einen aktiven Teil der Energieübertragungsvorrichtung aufgebracht, wobei ein aktiver Teil der Energieübertragungsvorrichtung ein Teil der Energieübertragungsvorrichtung ist, welcher zumindest teilweise dem zur Energieübertragung genutzten Magnetfeld ausgesetzt ist, und wobei die elektrische Leitfähigkeit des elektrisch leitfähigen Materials bzw. der zusätzlich angeordneten Materialschicht größer ist als die elektrische Leitfähigkeit des zumindest einen aktiven Teils. Das Aufbringen der zusätzlichen elektrisch leitfähigen Materialschicht auf den zumindest einen aktiven Teil erfolgt insbesondere durch ein Pressen, Schweißen, Schrumpfen und/oder Galvanisieren.

Bevorzugte Ausführungsformen der vorgenannten Aspekte werden nachfolgend angegeben.

In einer bevorzugten Ausführungsform umfasst der aktive Teil der Energieübertragungsvorrichtung zumindest ein Magnetflussführungselement mit einer magnetischen Leitfähigkeit bzw. relativen Permeabilität von weniger als 2000, vorzugsweise weniger als 1000, besonders bevorzugt von weniger als 500 und insbesondere von weniger als 100. Das zumindest eine Magnetflussführungselement weist somit eine geringere magnetische Leitfähigkeit auf als "klassisches Ferrit". Unter einem "klassischen Ferrit" wird im Sinne dieser Beschreibung insbesondere ein elektrisch schlecht oder nicht leitender ferrimagnetischer keramischer Werkstoff aus dem Eisenoxid Hämatit (Fe2O3) oder Magnetit (FesOa) und aus weiteren Metalloxiden verstanden. Beispielsweise umfasst oder ist das zumindest eine Magnetflussführungselement ein sogenanntes Ferrit-Komposite, d.h. insbesondere ein Ferrit-Polymer-Gemisch bzw. eine Ferrit-Polymer-Zusammensetzung bzw. ein Ferrit-Polymer-Verbundwerkstoff. Insbesondere ist das zumindest eine Magnetflussführungselement zumindest teilweise aus einem Ferrit-Komposite ausgebildet. Ein solches Ferrit-Komposite kann formstabil oder flexibel bzw. verformbar ausgebildet sein. Beispielsweise umfasst oder ist das zumindest eine Magnetflussführungselement zumindest eine Ferritmatte bzw. Ferritfolie, welche insbesondere ein Ferrit-Komposite (bzw. ein Kunststoffgemisch und/oder ein Polymer) umfasst. Insbesondere ist eine solche Ferritmatte flexibel bzw. verformbar ausgebildet. Beispielsweise kann das zumindest eine Magnetflussführungselement von der Firma BARLOG Plastics GmbH unter dem Handelsnamen "KEBABLEND" (insbesondere zur Herstellung spritzgegossener Magnete sowie weichmagnetischer Bauteile) vertriebene funktionelle Compounds bzw. Ferrit-Komposites umfassen. Vorzugsweise weist das zumindest eine Magnetführungselement ein Trägerpolymer (z.B. PP, PA6, PA12, PPS oder PPA) auf. Auf diesem Trägerpolymer können z.B. Hartferrit-Compounds (z.B. Sr- oder Ba-Ferrite), Seltenerd-Compounds (z.B. NdFeB, SmCo oder SmFeN) oder auch diverse weichmagnetische Füllstoffe (z.B. Fe oder weichmagnetische Ferrite) angeordnet bzw. aufgebracht sein. Solche Ferrit Komposites weisen in der Regel eine im Vergleich zum klassischen Ferrit deutlich geringere magnetische Leitfähigkeit, insbesondere im Bereich von $\mu_r$ = 60 bis $\mu_r$ = 100, auf.

Vorzugsweise wird das elektrisch leitfähige Material als zusätzliche Materialschicht, insbesondere direkt bzw. unmittelbar, an das zumindest eine Magnetflussführungselement angeordnet und/oder auf das zumindest eine Magnetflussführungselement aufgebracht.

In einer weiteren bevorzugten Ausführungsform umfasst der zumindest eine aktive Teil ein Magnetflussführungselement mit einem Ferrit-Polymer-Verbundwerkstoff, wobei die zusätzliche elektrisch leitfähige Materialschicht direkt an das Magnetflussführungselement angeordnet wird.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen unabhängigen Aspekte.

Kurze Beschreibung der Zeichnungen

| Figur 1 | zeigt eine schematische Zeichnung einer beispielhaften Energieübertragungsvorrichtung 100 in einer Explosionsansicht; |
| --- | --- |
| Figur 2 | zeigt eine schematische Zeichnung eines Rotors 30 der Energieübertragungsvorrichtung 100 von Figur 1 in einer Explosionsansicht; |
| Figur 3 | zeigt eine schematische Zeichnung eines Stators 50 der Energieübertragungsvorrichtung 100 von Figur 1 in einer Explosionsansicht; |
| Figur 4a | zeigt eine schematische Zeichnung eines Schnitts durch eine beispielhafte Energieübertragungsvorrichtung 100 im montierten Zustand; |
| Figur 4b | zeigt eine schematische Zeichnung einer beispielhaften Wicklungsanordnung zum Erzeugen eines für die Energieübertragung genutzten Magnetfeldes; |
| Figur 5a | zeigt eine fotografische Aufnahme einer weiteren beispielhaften Energieübertragungsvorrichtung 100, die zu Versuchszwecken im Rahmen der vorliegenden Erfindung verwendet wurde; |
| Figur 5b | zeigt eine weitere fotografische Aufnahme einer beispielhaften Energieübertragungsvorrichtung, die zu Versuchszwecken im Rahmen der vorliegenden Erfindung verwendet wurde, insbesondere eine Rotorwelle 12 der Energieübertragungsvorrichtung 100, welche mit einer zusätzlichen Kupferummantelung 13 versehen ist; |

| Figur 6 | zeigt Messergebnisse, welche für die Energieübertragungsvorrichtung 100 gemäß Figur 5a bzw. 5b erhalten wurden. In den Diagrammen ist jeweils das Ergebnis einer Messung für die Energieübertragungsvorrichtung unter Verwendung einer Stahlwelle 12 ohne zusätzliche Kupferbeschichtung 13 und unter Verwendung einer Stahlwelle 12 mit einer zusätzlichen Kupferbeschichtung 13 dargestellt. Dabei zeigt Figur 6a die Güte des Stators in Abhängigkeit der Magnetfeldfrequenz, Figur 6b die Induktivität des Stators in Abhängigkeit der Magnetfeldfrequenz, Figur 6c die Güte des Rotors in Abhängigkeit der Magnetfeldfrequenz, Figur 6d die Induktivität des Rotors in Abhängigkeit der Magnetfeldfrequenz, Figur 6e die Güte des gesamten Systems in Abhängigkeit der Magnetfeldfrequenz, und Figur 6f den theoretisch erreichbaren Wirkungsgrad in Abhängigkeit der Magnetfeldfrequenz; |
|---|---|
| Figur 7 | zeigt eine schematische Querschnittszeichnung einer weiteren beispielhaften Energieübertragungsvorrichtung mit einer zusätzlich angeordneten elektrisch leitfähigen Materialschicht im Bereich der Wicklung; |
| Figuren 8a-d | zeigen schematische Skizzen zum Einfluss eines Polierens der Oberfläche einer erfindungsgemäß zusätzlich angeordneten elektrisch leitfähigen Materialschicht, wobei sich die Figuren 8a und 8b auf den Fall eines polierten Materials und die Figuren 8c und 8d auf den Fall eines Materials mit einer Kerbe beziehen. |

Detaillierte Beschreibung der Zeichnungen

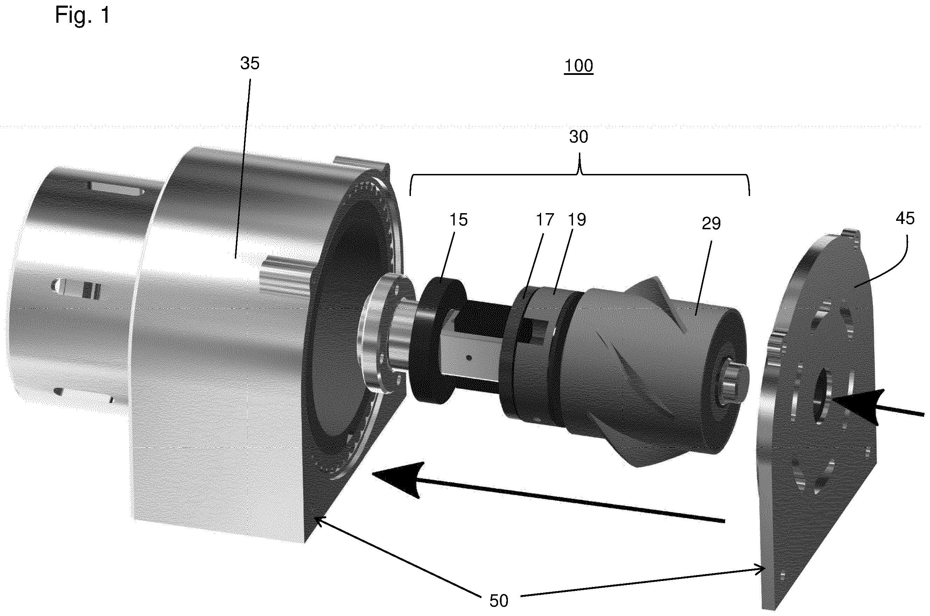

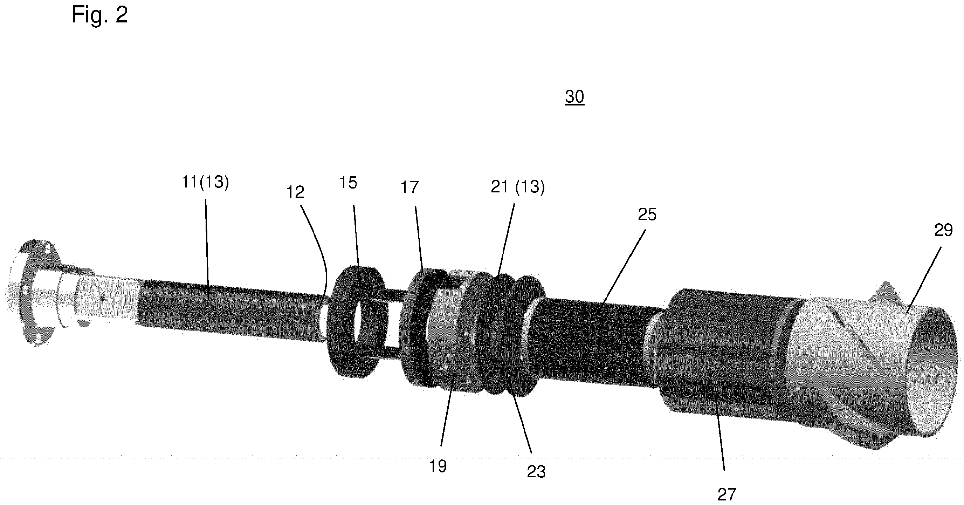

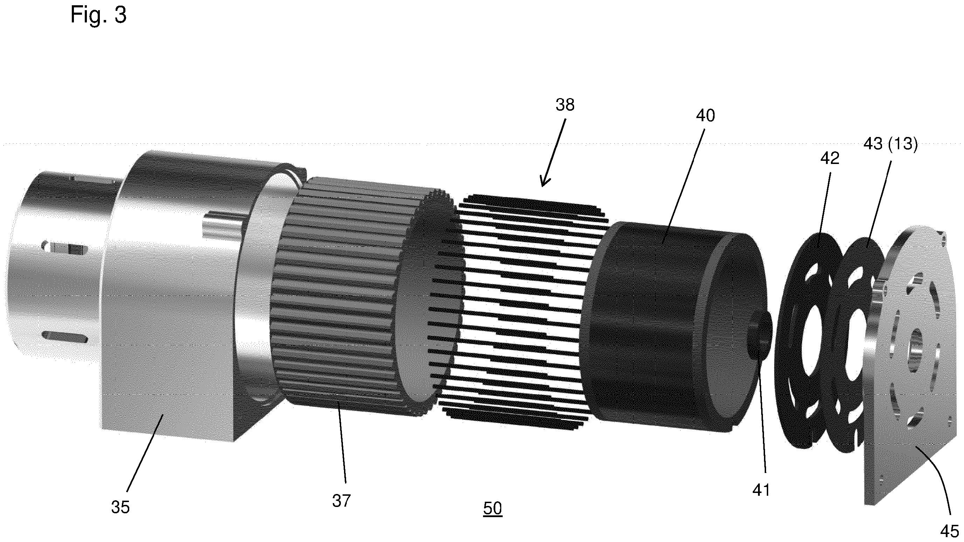

Die **Figur 1** zeigt eine schematische Zeichnung einer beispielhaften Energieübertragungsvorrichtung 100 mit einem Rotor 30 und einem Stator 50. Vom Rotor 30 sind in der Figur 1 ein Kugellager 15, eine Platine mit Isolierfolie 17, ein Kühlkörper 19 und eine Rotorhülse 29 zu sehen. Weitere Bestandteile des Rotors 30 sind in Figur 2 dargestellt. Vom Stator 50 ist in der Figur lediglich ein Gehäuse 35 und ein Deckel 45, welcher auf das Gehäuse 35 montiert werden kann, zu sehen. Weitere Bestandteile des Stators 50 sind in der Figur 3 dargestellt. Die eingezeichneten Pfeile deuten eine Montagerichtung zum Montieren bzw. Zusammenfügen der einzelnen Komponenten der Energieübertragungsvorrichtung 100 an.

Die **Figur 2** zeigt eine schematische Explosionsansicht des Rotors 30 der Energieübertragungsvorrichtung 100 von Figur 1. Neben den bereits aus der Figur 1 ersichtlichen Komponenten, d.h. dem Kugellager 15, der Platine mit Isolierfolie 17, dem Kühlkörper 19 und der Rotorhülse 29, sind in der Darstellung der Figur 2 auch noch eine Rotorwicklung 27 mit Kunststoffträger, ein (optionales) Ferritplättchen 23, eine (optionale) Ferritmatte 25 mit Kunststoffträger, eine (Stahl-)Welle 12 mit einer zusätzlichen Kupferhülse 11 und ein zwischen dem Kühlkörper 19 und dem Ferritplättchen 23 angeordnetes zusätzliches Kupferplättchen 21 zu sehen. Die zusätzliche Kupferhülse 11 der (Stahl-)Welle 12 und das zusätzliche Kupferplättchen 21 sind zusätzliche elektrisch leitfähige Materialschichten 13, welche an aktiven Teilen der Energieübertragungsvorrichtung 100 bzw. des Rotors 30 der Energieübertragungsvorrichtung 100, nämlich an der Welle 12 und an den Kühlkörper 19 (aus Aluminium) angeordnet und/oder daran aufgebracht sind. Diese zusätzlich angeordneten bzw. aufgebrachten leitfähigen Materialschichten 13 dienen zur Verlustreduzierung in der Stahlwelle 12 und im Aluminium-Kühlkörper 19. Die elektrische Leitfähigkeit der angeordneten zusätzlichen Materialschicht 13 (hier Kupfer) ist höher als die elektrische Leitfähigkeit der jeweiligen aktiven Teile 12 und 19 (Stahl, Aluminium). Durch die zusätzlich verwendete bzw. angeordnete bzw. aufgebrachte elektrisch leitfähige Materialschicht 13 (hier Kupfer), kann vorteilhafterweise erreicht werden, dass das für die Energieübertragung genutzte Magnetfeld und somit durch das Magnetfeld induzierte Wirbelströme weniger weit oder im Idealfall gar nicht in die Materialien der aktiven Teile 12 und 19 eindringen (Skin-Effekt). Etwaige in diesen Bereichen erzeugte Wirbelströme bilden sich hauptsächlich oder lediglich in der zusätzlichen angeordneten Materialschicht 13, also der Kupferhülse 11 bzw. dem Kupferplättchen 21 aus. Auf Grund der hohen oder höheren elektrischen Leitfähigkeit der zusätzlich angeordneten Materialschicht 13 im Vergleich zur elektrischen Leitfähigkeit der aktiven Teile, bewirken die durch das Magnetfeld induzierten Wirbelströme geringere Verluste und/oder eine geringere Wärmeentwicklung. Insbesondere erwärmen sich die aktiven Teile durch die angeordnete zusätzliche Kupferschicht weniger stark als für den Fall, dass keine solche Kupferschicht 13 verwendet wird. Der Wirkungsgrad der Energieübertragungsvorrichtung 100 kann somit gesteigert werden.

Anstelle der Verwendung eines Ferrits (bzw. des Ferritplättchens 23 und/oder der Ferritmatte 25) kann es vorteilhaft sein, ein elektrisch und magnetisch nichtleitendes Material, insbesondere Kunststoff, einzusetzen. Insbesondere kann durch das Anordnen eines solchen nichtleitenden Materials (wie z.B. Kunststoff) zwischen der zusätzlich elektrisch leitfähigen Materialschicht 13 und einer Spule der Energieübertragungsvorrichtung 100 ein Abstand zwischen der zusätzlich elektrisch leitfähigen Materialschicht 13 und der Spule hergestellt bzw. eingehalten werden. In anderen Worten kann ein nichtleitendes Material beispielsweise in Form eines Abstandselements zwischen der zusätzlich elektrisch leitfähigen Materialschicht 13 und einer Spule der Energieübertragungsvorrichtung 100 angeordnet sein. Das nichtleitende Material, insbesondere das Abstandselement aus nichtleitendem Material, kann beispielsweise Kunststoff umfassen oder vollständig aus Kunststoff bestehen. Das nichtleitende Material, insbesondere das Abstandselement aus nichtleitendem Material, kann beispielsweise ferritfrei sein, d.h. kein Ferrit enthalten und bevorzugt kein Kompositmaterial umfassend Ferrit enthalten. Somit kann sich das nichtleitende Material, insbesondere das Abstandelement, von einer Ferritmatte unterscheiden, da das nichtleitende Material frei von Ferrit-Kompositen ist, d.h. keine Ferrit-Komposite aufweist. Im Rahmen der vorliegenden Erfindung hat sich herausgestellt, dass ein solcher Abstand vorteilhafterweise dazu führt, dass Verluste, die bei einem direkten Anordnen oder Anlegen der Spule an die zusätzliche elektrisch leitfähige Materialschicht 13 auftreten würden, reduziert bzw. vermieden werden können. Zudem können durch die Verwendung eines Kunststoffes anstelle von Ferrit die Materialkosten reduziert werden. Gerade wenn die zusätzliche elektrisch leitfähige Materialschicht 13 eine Kupferschicht ist, kann es vorteilhaft sein, anstelle des Ferrits einen nichtleitenden Kunststoff zu verwenden, und zwar insbesondere derart, dass ein Abstand zwischen der Kupferschicht und der Spule, wie es auch bei der Verwendung von Ferrit der Fall wäre, beibehalten wird.

Die **Figur 3** zeigt eine schematische Explosionsansicht des Stators 50 der Energieübertragungsvorrichtung 100 von Figur 1. Neben den bereits aus der Figur 1 ersichtlichen Komponenten, d.h. dem Gehäuse 35 und dem Deckel 45, sind in der Darstellung der Figur 3 auch noch ein Ferritträger 37, Ferritstäbe 38, eine Statorwicklung mit Kunststoffträger 40, einem Lager 41, eine (optionale) Ferritscheibe 42 und eine zusätzliche Kupferscheibe 43 zu sehen. Die Kupferscheibe 43 ist zwischen der (optionalen) Ferritscheibe 42 und dem Deckel 45 angeordnet. Die Kupferscheibe 43 ist eine zusätzliche elektrisch leitfähige Materialschicht 13, welche an einen aktiven Teil der Energieübertragungsvorrichtung 100 bzw. des Stators 50 der Energieübertragungsvorrichtung 100, nämlich an den Deckel 45 angeordnet bzw. darauf aufgebracht ist. Die elektrische Leitfähigkeit der angeordneten zusätzlichen Materialschicht 13 (hier Kupfer) ist höher als die elektrische Leitfähigkeit des aktiven Teils 45 (Aluminium). Durch die zusätzlich verwendete bzw. angeordnete bzw. aufgebrachte elektrisch leitfähige Materialschicht 13 (hier Kupfer), kann vorteilhafterweise erreicht werden, dass das für die Energieübertragung genutzte Magnetfeld und somit durch das Magnetfeld induzierte Wirbelströme weniger weit oder im Idealfall gar nicht in das Material des aktiven Teils, d.h. hier dem Aluminium-Deckel 45 eindringen (Skin-Effekt). Etwaige in diesem Bereich erzeugte Wirbelströme bilden sich hauptsächlich oder lediglich in der zusätzlichen angeordneten Materialschicht 13, also der Kupferscheibe 43 aus. Auf Grund der hohen oder höheren elektrischen Leitfähigkeit der zusätzlich angeordneten Materialschicht 13 im Vergleich zur elektrischen Leitfähigkeit des aktiven Teils, bewirken die durch das Magnetfeld induzierten Wirbelströme geringere Verluste und/oder eine geringere Wärmeentwicklung. Insbesondere erwärmen sich die aktiven Teile durch die angeordnete zusätzliche Kupferschicht 13 weniger stark als im Fall, dass keine solche Kupferschicht verwendet wird. Der Wirkungsgrad der Energieübertragungsvorrichtung 100 kann somit gesteigert werden.

Die Ferritschichten dienen der Flussführung. Durch deren Einsatz wird die Länge einer magnetischen Feldlinie verkürzt, wodurch die Induktivität der Wicklungen steigt. Im Ferrit entstehen in geringem Anteil Ummagnetisierungsverluste. Ferrit besteht aus sehr kleinen Partikeln, deren elektrische Leitfähigkeit auch bei hohen Frequenzen (z.B. 500 kHz) keine Wirbelströme verursachen. Geblechtes Eisen als Flussführung, wie z.B. Elektroblech in Maschinen, ist insbesondere bei hohen Frequenzen der induktiven Energieübertragung nicht als Flussführung geeignet. Aus diesem Grund wird meist Ferrit verwendet. Eine Flussführung leitet in der Praxis aufgrund der endlichen magnetischen Leitfähigkeit niemals alle Feldlinien um, d.h. hinter einer Flussführung ist noch ein Feld messbar. Dieses Feld trifft dann auf andere Materialien bzw. aktive Teile. Weiterhin existieren Bereiche, welche unter Verwendung von klassischem Ferrit nicht mit einer Flussführung versehen werden können. Aktuell werden neben den dargestellten klassischen Ferritstäben (ein sprödes Material ähnlich Keramik, das sich nicht fräsen lässt und somit nur eingeschränkte Geometrien zulässt) auch zwei neuartige Materialien verwendet, nämlich

- eine flexible Ferritmatte (insbesondere umfassend ein flexibles bzw. weiches und/oder gummiartiges Ferrit-Komposite, siehe die Ferritmatte 25 in Fig. 2), welche ein Polymer bzw. ein gummiartiges Kunststoffgemisch umfasst, und/oder
- formstabiles Ferrit-Komposite, d.h. insbesondere ein Ferrit-Polymer-Verbundwerkstoff, der sich fräsen lässt und dessen Herstellung z.B. im Spritzgussverfahren erfolgt.

Beide Materialien, welche insbesondere ein Trägerpolymer und ein magnetisches Material umfassen, oder insbesondere aus einem Trägerpolymer und einem magnetischen Material zusammengesetzt sind, haben eine magnetische Leitfähigkeit (relative Permeabilität) im Bereich von $\mu_r$ = 60 bis $\mu_r$ = 100. Demgegenüber steht klassisches Ferrit mit $\mu_r$ = 2000. Problematisch ist der Einsatz von klassischem Ferrit in rotierenden Systemen aufgrund von mechanischen Belastungen wie Vibrationen etc. Als Folge der Belastungen kann das Material brechen und weist nach dem Bruch teils schlechte Eigenschaften auf. Werden die oben genannten neuartigen Ferritmaterialien verwendet (wie in den Figuren 2 und 3 gezeigt), kann die notwendige Stabilität erreicht werden. Zudem sind flexiblere Geometrien möglich.

Wie oben bereits angedeutet haben diese neuartigen Ferritmaterialien allerdings im Vergleich zum klassischen Ferrit eine viel geringere magnetische Leitfähigkeit bzw. Permeabilität $\mu$, was gemäß der weiter oben genannten Formel eine höhere Eindringtiefe $\delta$ bedeutet. Aus diesem Grund ist es vorteilhaft, eine zusätzliche hochleitende Schicht auf schlecht leitende Materialien aufzubringen, insbesondere dann, wenn zusätzlich eine magnetische Leitfähigkeit vorhanden ist (wie z.B. bei Stahl).

Die leitenden Flächen Kupfer, Aluminium bzw. Silber dienen allgemein der Flussschirmung, durch diese wird ebenfalls der Weg der magnetischen Feldlinien verändert. Es entstehen jedoch Wirbelströme, welche je nach Leitfähigkeit des Materials unterschiedlich hohe Verluste verursachen. Hochleitende Materialien schirmen bei ausreichender Dicke (siehe die obige Tabelle) das Feld vollständig ab. Die Verluste werden durch den Einsatz von hochleitenden Materialien Kupfer/Silber gegenüber Stahl signifikant reduziert. Wird Aluminium eingesetzt, ist die Reduktion geringer aber dennoch deutlich vorhanden. Antriebswellen elektrischer Maschinen sind meistens aus Stahl. Gehäuse sind meistens aus Aluminium, bei Stahlgehäusen wäre eine zusätzliche hochleitende Schicht unabdingbar. In beiden Fällen wird durch den Einsatz von zusätzlichen dünnen Kupfer-/Silberschichten eine Reduzierung der Wärmeentwicklung erzielt.

Die zusätzlichen hochleitenden Materialschichten 13 können z.B. durch Pressen und/oder Schweißen und/oder Schrumpfen etc. mit einer Schichtdicke, welche größer als das Drei- bis Fünffache der Eindringtiefe δ ist, angeordnet bzw. auf den zumindest einen aktiven Teil aufgebracht werden. Typischerweise muss z.B. bei geringen Frequenzen (z.B. 50kHz) ein Kupferblech mit 1.5 mm Materialstärke verwendet werden, damit der Wirbelstrom sich vollständig nur im hochleitenden Material ausbreitet. Der Strombelag bezüglich der Eindringtiefe fällt mit $1/e$ ab, so dass bereits ein 297 μm dickes Kupferblech im genannten Fall eine Reduzierung um 63% erzielt (siehe obige Tabelle). Es versteht sich, dass diese Werte nur als Beispiel dienen. Die oben genannte Formel der Eindringtiefe gilt streng genommen nur für runde Kupferleiter, bei Kupferflächen muss die Eindringtiefe gesondert berechnet werden. Es handelt sich hierbei aber um eine im Rahmen dieser Erfindung vernachlässigbare Korrektur. Alternativ kann z.B. eine Schicht mit geringerer Schichtdicke (z.B. im Bereich von 100-300 μm) des elektrisch hochleitenden Materials durch Galvanisieren etc. aufgebracht werden. Beispielsweise eignet sich hierfür Silber auf Stahl oder Aluminium. Die geringe Schichtdicke ist für Frequenzen um 500 kHz ausreichend. Eine Galvanisation mit Kupfer kann ebenfalls erfolgen, jedoch ist das Ergebnis aufgrund der höheren Leitfähigkeit bei Silber besser.

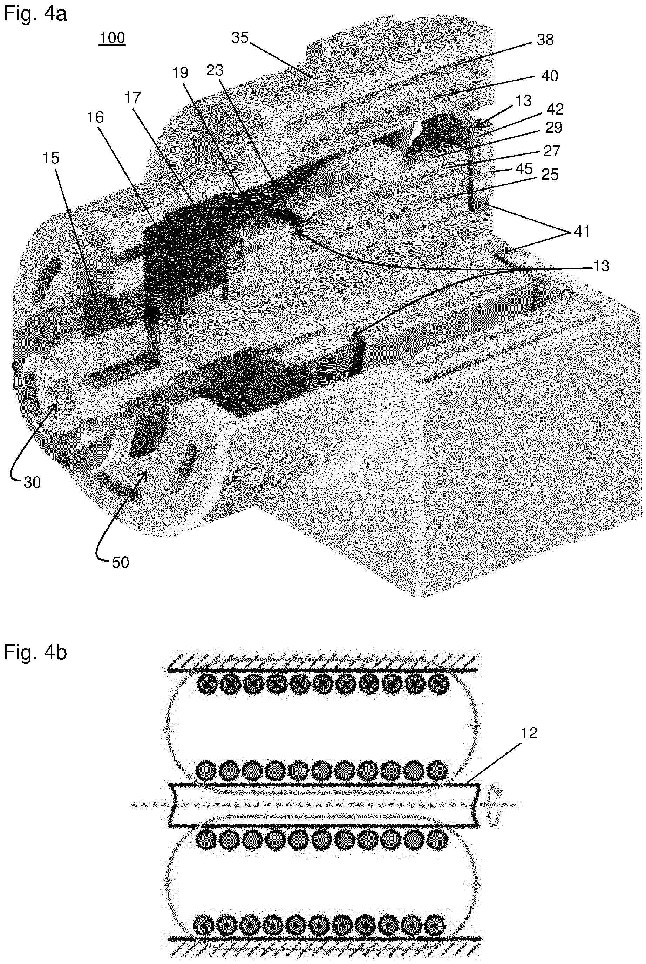

Die **Figur 4a** zeigt eine schematische Zeichnung eines Schnitts durch eine beispielhafte Energieübertragungsvorrichtung 100 im montierten Zustand. Unter einem montierten Zustand wird verstanden, dass der Rotor 30 und der Stator 50 der Energieübertragungsvorrichtung 100 zusammengebaut bzw. zusammengesetzt sind. Die Komponenten der in Figur 4a gezeigten Energieübertragungsvorrichtung 100 entsprechen den bereits in den Figuren 1 bis 3 dargestellten Komponenten.

Insbesondere ist in der Figur 4a der Rotor 30 mit dem Lager 15, der Platine mit Isolierfolie 17, dem Kühlkörper 19, der Ferritmatte 25, der Rotorwicklung 27 und der Rotorhülse 29 erkennbar. Die Platine 17, welche auf einem Halbleitermaterial 16 angeordnet ist, umfasst insbesondere einen Gleichrichter. Die Rotorwicklung 27 ist zwischen der Rotorhülse 29 und der Ferritmatte 25 angeordnet. Zwischen dem Kühlkörper 19 und der Rotorhülse 29 kann ein Ferritplättchen 23 (in Figur 4a lediglich angedeutet) angeordnet sein. Wie ferner in der Figur 4a angedeutet, ist bzw. wird z.B. zwischen diesem Ferritplättchen 23 und dem Kühlkörper 19 eine zusätzlich elektrisch leitfähige Materialschicht 13, insbesondere in Form eines Kupferplättchens 21 (siehe Figur 2), angeordnet. Diese zusätzliche elektrisch leitfähige Materialschicht 13, welche unmittelbar am Kühlkörper 19 angeordnet ist bzw. wird, dient insbesondere zur Verlustreduzierung im Kühlkörper 19.

Ferner ist in der Figur 4a der Stator 50 mit dem Gehäuse 35, den Ferritstäben 38, der Statorwicklung 40, dem Lager 41, der (optionalen) Ferritscheibe 42 und dem Deckel 45 erkennbar. Wie in der Figur 4a angedeutet, kann zwischen der Ferritscheibe 42 und dem Deckel 45 eine zusätzliche elektrisch leitfähige Schicht 13, insbesondere in Form einer Kupferscheibe 43 (siehe Figur 3), angeordnet sein bzw. werden. Die zusätzliche elektrisch leitfähige Materialschicht 13, welche unmittelbar am Deckel 45 angeordnet ist bzw. wird, dient insbesondere zur Verlustreduzierung im Deckel 45.

Das Ferritplättchen 23, die Ferritmatte 25 und die Ferritscheibe 42 dienen jeweils der magnetischen Flussführung. Jedes dieser Elemente kann somit allgemein auch als Magnetflussführungselement bezeichnet werden.

In der **Figur 4b** ist eine schematische Zeichnung einer beispielhaften Wicklungsanordnung zum Erzeugen eines für die Energieübertragung genutzten Magnetfeldes gezeigt. Wie in der Zeichnung dargestellt ist die Rotorwelle 12 dem Magnetfeld ausgesetzt, d.h. das Magnetfeld bzw. die damit verbundenen Flusslinien dringen in die Rotorwelle 12 ein. Definitionsgemäß ist die Rotorwelle 12 daher ein aktiver Teil der Energieübertragungsvorrichtung 100. Entsprechendes gilt auch für die oben erwähnten Komponenten, d.h. z.B. für den Kühlkörper 19 und dem Ferritplättchen 23 des Rotors 30 sowie für das Ferritplättchen 42 und den Deckel 45 des Stators 50.

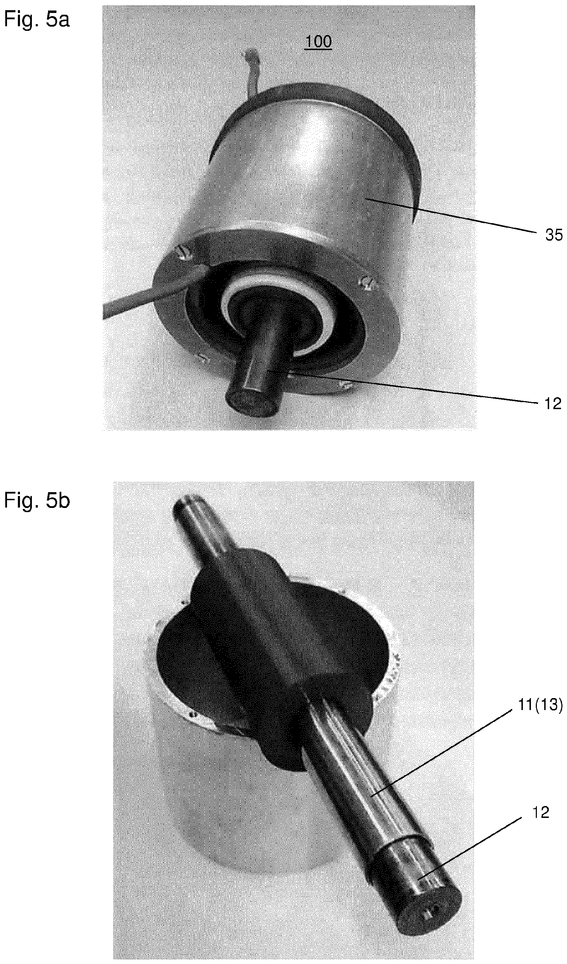

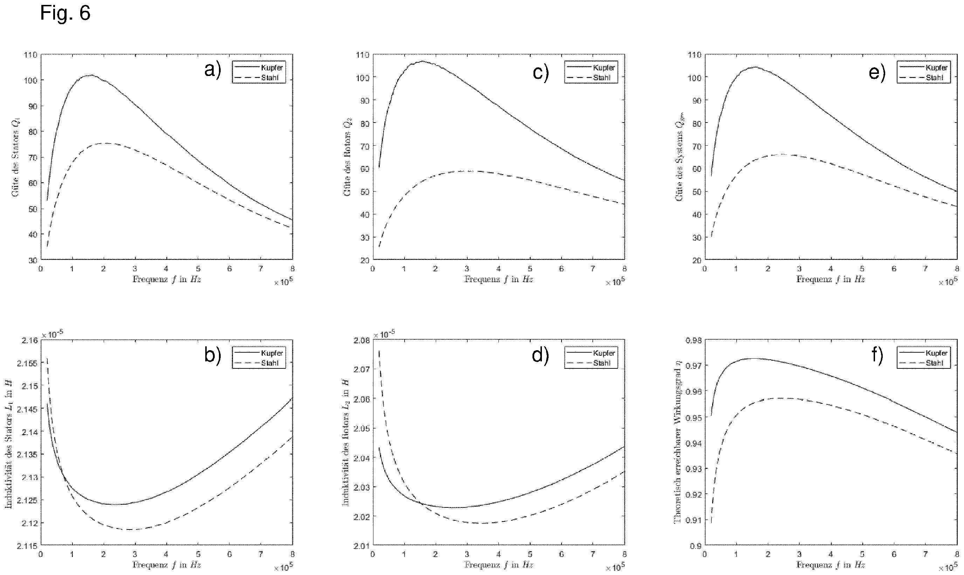

Die **Figuren 5a und 5b** zeigen fotografische Aufnahmen einer weiteren beispielhaften Energieübertragungsvorrichtung 100, die zu Versuchs- bzw. Messzwecken im Rahmen der vorliegenden Erfindung verwendet wurde. Insbesondere ist in der Figur 5a ein Statorgehäuse 35 und eine Rotorwelle 12 erkennbar. Im Gegensatz zur Figur 5a ist in der Figur 5b die Stahlwelle 12 mit einer zusätzlichen Kupferummantelung 13 versehen. An dieser Energieübertragungsvorrichtung 100 wurden verschiedene Kenngrößen in Abhängigkeit der Frequenz des zur Energieübertragung benutzten Magnetfeldes durchgeführt, und zwar jeweils ohne zusätzliche Kupferummantelung 13 der Stahlwelle 12 (siehe Fig. 5a) und mit zusätzlicher Kupferummantelung 13 der Stahlwelle 12 (siehe Fig. 5b). Die Messergebnisse sind in den Figuren 6a-f dargestellt.

Die **Figuren 6a-f** zeigen Messergebnisse, welche durch Vermessung der in den Figuren 5a bzw. 5b gezeigten Energieübertragungsvorrichtung 100 erhalten wurden. In den Diagrammen ist jeweils das Ergebnis einer Messung für die Energieübertragungsvorrichtung 100 unter Verwendung einer Stahlwelle 12 ohne zusätzliche Kupferbeschichtung 13 (gestrichelte Kurve) und unter Verwendung einer Stahlwelle 12 mit einer zusätzlichen Kupferbeschichtung 13 dargestellt. Dabei zeigt die **Figur 6a** jeweils die Güte des Stators in Abhängigkeit der Magnetfeldfrequenz, die **Figur 6b** jeweils die Induktivität des Stators in Abhängigkeit der Magnetfeldfrequenz, die **Figur 6c** jeweils die Güte des Rotors in Abhängigkeit der Magnetfeldfrequenz, die **Figur 6d** jeweils die Induktivität des Rotors in Abhängigkeit der Magnetfeldfrequenz, die **Figur 6e** jeweils die Güte des gesamten Systems in Abhängigkeit der Magnetfeldfrequenz, und die **Figur 6f** jeweils den theoretisch erreichbaren Wirkungsgrad in Abhängigkeit der Magnetfeldfrequenz. Die Figuren 6a-f illustrieren somit den experimentellen Vergleich zwischen einer Stahlwelle und einer kupferbeschichteten Welle. Die dargestellte Güte Q ist definiert mit $Q = \frac{2\pi \cdot f \cdot L}{R}$, wobei f die Frequenz des zur Energieübertragung genutzten Magnetfeldes, L die Induktivität einer Spule der Energieübertragungsvorrichtung (insbesondere die Induktivität der zur Erzeugung des Magnetfelds verwendeten Spule) und R ein Wiederstand ist, wobei sich der Widerstand R aus dem DC-Leitungswiderstand, den Ummagnetisierungsverlusten in z.B. Eisen und den Wirbelstromverlusten zusammensetzt. Im Messaufbau verbessert sich die Güte Q durch die zusätzlich verwendete Kupferschicht hauptsächlich aufgrund der geringeren Wirbelstromverluste. Die Spule wurde im Messaufbau nicht verändert, es wurde lediglich das Wellenmaterial ausgetauscht. Ein System weist grundsätzlich weniger Verluste auf, wenn die Güte höher ist. Eine ideale Spule weist keinen Widerstand auf und hat eine gegen unendlich strebende Güte (supraleitende Spule). Aus den Figuren 6a, 6c und 6e ist ersichtlich, dass die Güte des Stators, die Güte des Rotors und die Güte des Gesamtsystems (also Rotor und Stator) unter Verwendung einer Stahlwelle 12 mit einer zusätzlichen Kupferbeschichtung 13 über den gesamten Frequenzbereich (von 0 bis $8 \cdot 10^5$ Hz) höher ist als unter Verwendung einer Stahlwelle 12 ohne zusätzliche Kupferbeschichtung 13. Das System wird in diesem Fall um mehr als 50% in der Güte verbessert. Gemäß Fig. 6f ist auch der Wirkungsgrad unter Verwendung einer Stahlwelle 12 mit einer zusätzlichen Kupferbeschichtung 13 über den gesamten Frequenzbereich (von 0 bis $8 \cdot 10^5$ Hz) höher ist als unter Verwendung einer Stahlwelle 12 ohne zusätzliche Kupferbeschichtung 13. Im Betrieb unter Last zeigte sich beim hochleitenden Material (Kupfer) gegenüber den anderen Konfigurationen (Stahl) deutlicher Vorteil in der Wärmeentwicklung. Unter Verwendung der zusätzlichen Kupferschicht wurde im Prototyp 1200 W Leistung übertragen, ohne dass sich eine signifikante Erwärmung im Rotor und/oder Stator zeigte.

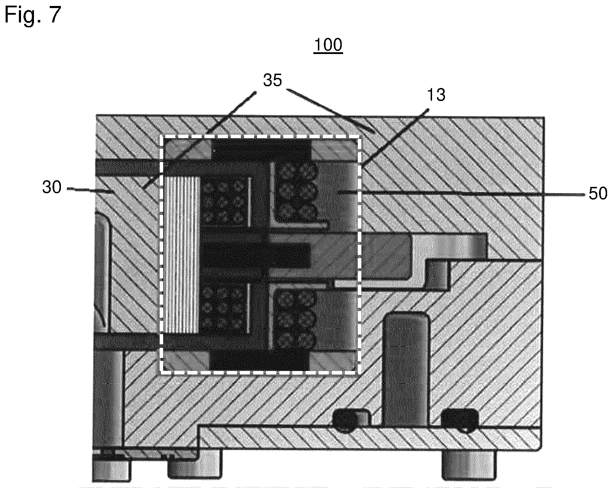

Die **Figur 7** zeigt eine schematische Zeichnung eines Querschnitts einer weiteren beispielhaften Energieübertragungsvorrichtung 100. Die Energieübertragungsvorrichtung 100 umfasst einen Rotor 30 und einen Stator 50 mit einem Aluminium-Gehäuse 35. Die Rotationsachse verläuft vertikal am linken Bildrand. Eine flächige Beschichtung des Aluminiumkörpers 35 im Bereich der Wicklung mit Silber oder Kupfer, welche in der Figur 7 als gestrichelte Linie angedeutet ist, erhöht signifikant die Güte des Spulensystems. Der Aluminiumkörper bzw. das Gehäuse 35 ist in diesem Ausführungsbeispiel also der aktive Teil der Energieübertragungsvorrichtung 100.

Wie anhand der Figuren 1 bis 7 erläutert, können also zusätzliche elektrisch hochleitende Materialien im aktiven Teil eines rotierenden Energieübertragers 100 verwendet werden, um eine Wärmeentwicklung zu reduzieren. Als aktiver Teil ist jeder Bereich zu verstehen, welcher dem magnetischen Feld direkt oder in Teilen ausgesetzt ist. Dabei werden die elektrisch hochleitenden Materialien vorzugsweise nur an Stellen eingesetzt, an welchen ansonsten schlechte leitfähige Materialien mit dem Magnetfeld in Berührung kommen oder an Stellen, an denen eine Feldschirmung nach außen notwendig ist. Ist ein Material nichtleitend, werden keine Wirbelströme induziert. Es entsteht dann aber auch keine Schirmungswirkung, da die Schirmungswirkung von Wirbelströmen hervorgerufen wird.

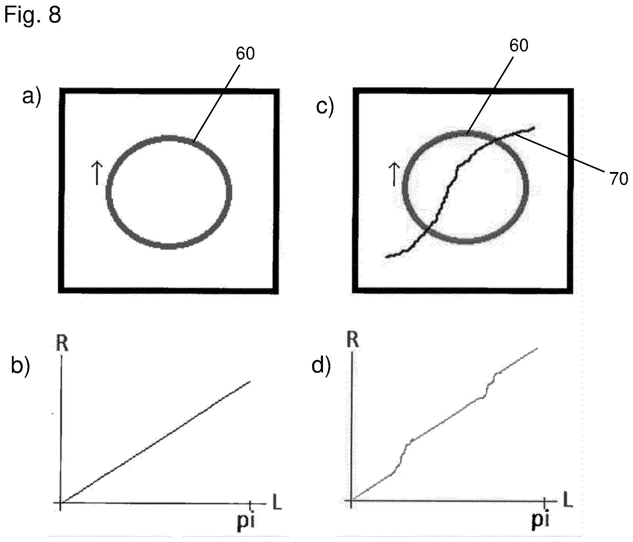

Neben dem bzw. zusätzlich zum Einsatz von hochleitendem Material kann auch das Polieren der Oberfläche dieses Materials von Vorteil sein. Eine polierte Oberfläche sorgt für einen kürzeren Weg, auf dem sich ein Wirbelstrom ausbreitet. Die **Figur 8** veranschaulicht die Ausbreitung eines entstehenden Wirbelstroms 60 in einer rechteckigen Platte schematisch, und zwar für den Fall eines polierten Materials (Figuren 8a und 8b) und für den Fall eines Materials mit einer Kerbe 70 (Figuren 8c und 8d). Wie anhand der Figuren 8a und 8b ersichtlich ist, nimmt für den Fall eines polierten Materials der zugehörige Widerstand R über die Umfangslänge pi des Wirbelstroms 60 linear und ohne Sprünge zu. Wie anhand der Figuren 8c und 8d ersichtlich ist, nimmt für den Fall eines unpolierten Materials bzw. eines Materials mit einer Kerbe 70 der zugehörige Widerstand R über die Umfangslänge pi des Wirbelstroms 60 nichtlinear zu. Auf Grund der Kerbe 70 nimmt der Weg, auf dem sich der Wirbelstrom 60 ausbreitet, zu. Dies resultiert in einem nichtlinearen Widerstandsanstieg im Bereich der Kerbe 70, und somit zu höheren Verlusten bzw. einer höheren Wärmeentwicklung auf Grund des Wirbelstroms 60. Mit anderen Worten sorgt ein Polieren bzw. ein Entfernen von Kerben 70 für eine weitere Reduzierung der Wärmeentwicklung. Der Einfluss von Kerben 70 ist direkt mit der Eindringtiefe verbunden. Sofern die Kerben 70 eine geringere Tiefe haben als die Eindringtiefe des Wirbelstromes 60, so ist auch die Auswirkung gering. Da der Strombelag gemäß der obigen Tabelle mit 1/e abfällt, kann sich aber auch schon eine relativ geringe Kerbe 70 mit beispielsweise einer Tiefe von 100 $\mu$m negativ auf die Wärmeentwicklung auswirken. Durch ein Polieren wird diesem negativen Effekt entgegengewirkt.

Zusammengefasst beschreibt die vorliegende Offenbarung also eine Lösung, wie die von Wirbelströmen verursachte Erwärmung in einer Energieübertragungsvorrichtung bzw. in rotierenden (induktiven) Energieübertragungssystemen gesenkt werden kann. Induzierte Wirbelströme verursachen Verluste in Rotor und Stator. Besonders für die elektrische Erregung elektrisch erregter Synchronmaschinen im Sinne eines Schleifringersatzes ist die Lösung vorteilhaft, ist aber auch in anderen rotierenden Energieübertragungssystemen einsetzbar. Hochfrequente elektromagnetische Wellen verursachen an der Oberfläche von elektrisch leitenden Materialien induzierte Wirbelströme (Skin-Effekt), welche die Oberfläche erwärmen (z.B. in der Welle und im Bereich der Wicklung). Die Eindringtiefe hängt von Material und von der Frequenz des Magnetfelds ab und liegt in einem nano- bis μ-Meter Bereich. Die Kühlung, besonders für die Welle, ist technisch sehr problematisch. Durch das Aufbringen einer elektrisch hochleitenden Materialschicht (z.B. aus Kupfer, Silber, etc.) auf die elektrisch aktiven Teile (z.B. im Bereich der Statorwicklung, Welle, etc.) des rotierenden Energieübertragers kann eine Erwärmung reduziert werden. Denn die Leitfähigkeit dieser Materialien ist höher als von Stahl. Sie sind aber teuer und haben keine ausreichende mechanische Stabilität, um den Stahl zu ersetzen. Da die Eindringtiefe der Wirbelströme in diesen hochleitenden Materialien sehr gering ist, genügt es, eine dünne Schicht dieser hochleitenden Materialien auf die elektrisch aktiven Teile aufzubringen. Weiterhin kann auch die Oberfläche poliert werden, um die Erwärmung bzw. die Verluste weiter zu mindern.

## Bezugszeichenliste

| | |
|---|---|
| 12 | Welle (Stahlwelle) |
| 13 | zusätzlich elektrisch leitfähige Materialschicht |
| 15 | Lager bzw. Kugellager |
| 16 | Halbleiter |
| 17 | Platine mit Isolierfolie |
| 19 | Kühlkörper |
| 21 | Kupferplättchen |
| 23 | Ferritplättchen |
| 25 | Ferritmatte mit Kunststoffträger |
| 27 | Rotorwicklung mit Kunststoffträger |
| 29 | Rotorhülse |
| 30 | Rotor |
| 35 | Gehäuse |
| 37 | Ferritträger |
| 38 | Ferritstäbe |
| 40 | Statorwicklung mit Kunststoffträger |
| 41 | Lager bzw. Kugellager |
| 42 | Ferritscheibe |
| 43 | Kupferscheibe |
| 45 | Deckel |
| 50 | Stator |
| 60 | Wirbelstrom |
| 70 | Kerbe |
| 100 | Energieübertragungsvorrichtung |

## Patentansprüche

1. Verfahren zur Steigerung der Effizienz einer induktiven Energieübertragungsvorrichtung (100), mit der mit Hilfe eines Magnetfelds elektrische Energie kontaktlos in elektrische Energie umgewandelt wird, um einen Rotor einer elektrischen Maschine elektrisch zu erregen, umfassend den Schritt:

   - Anordnen einer zusätzlichen elektrisch leitfähigen Materialschicht (13) an zumindest einen aktiven Teil (12, 19, 35, 45) der Energieübertragungsvorrichtung (100), wobei ein aktiver Teil der Energieübertragungsvorrichtung (100) ein Teil der Energieübertragungsvorrichtung (100) ist, welcher zumindest teilweise dem zur Energieübertragung genutzten Magnetfeld ausgesetzt ist, wobei die elektrische Leitfähigkeit der zusätzlichen Materialschicht (13) größer ist als die elektrische Leitfähigkeit des zumindest einen aktiven Teils (12, 19, 35, 45),

   **dadurch gekennzeichnet, dass** die angeordnete zusätzliche Materialschicht (13) eine Schichtdicke aufweist, welche in Abhängigkeit einer vorbestimmten Frequenz des zur Energieübertragung genutzten Magnetfelds gewählt wird.

2. Verfahren nach Anspruch 1, wobei der zumindest eine aktive Teil (12, 19, 35, 45) der Energieübertragungsvorrichtung (100) ein Bestandteil einer stationären Primärseite (50) und/oder einer rotierbaren Sekundärseite (30) der Energieübertragungsvorrichtung (100) ist.

3. Verfahren nach Anspruch 1 oder 2, wobei der zumindest eine aktive Teil (12, 19, 35, 45) der Energieübertragungsvorrichtung (100) eine Welle (12) und/oder einen Kühlkörper (19) und/oder ein Ferritplättchen (23) und/oder ein Gehäuse (35) und/oder eine Statorwicklung (40) und/oder eine Rotorwicklung (27) und/oder eine Ferritscheibe (42) und/oder einen Deckel (45) der Energieübertragungsvorrichtung (100) umfasst.

4. Verfahren nach einem der vorangehenden Ansprüche, wobei die Schichtdicke der angeordneten zusätzlichen Materialschicht (13) mindestens einer durch den Skin-Effekt bedingten Eindringtiefe ($\delta$) in das Material der zusätzlichen Materialschicht (13) bei einer vorgegebenen Frequenz des zur Energieübertragung genutzten Magnetfelds entspricht, und wobei die Schichtdicke der angeordneten zusätzlichen Materialschicht (13) insbesondere mindestens das Zweifache der durch den Skin-Effekt bedingten Eindringtiefe ($\delta$) in das Material der zusätzlichen Materialschicht (13) bei einer vorgegebenen Frequenz des zur Energieübertragung genutzten Magnetfelds beträgt.

5. Verfahren nach einem der vorangehenden Ansprüche,
wobei die zusätzliche elektrisch leitfähige Materialschicht (13) eine relative Permeabilität $\mu_r$ von ungefähr 1 aufweist.

6. Verfahren nach einem der vorangehenden Ansprüche, wobei eine Oberfläche der angeordneten zusätzlichen Materialschicht (13) poliert wird.

7. Verfahren nach einem der vorangehenden Ansprüche, wobei das Aufbringen der zusätzlichen elektrisch leitfähigen Materialschicht (13) auf den zumindest einen aktiven Teil (12, 19, 35, 45) der Energieübertragungsvorrichtung (100) durch Pressen und/oder Schweißen und/oder Schrumpfen und/oder Galvanisieren erfolgt.

8. Verfahren nach einem der vorangehenden Ansprüche, wobei der zumindest eine aktive Teil (12, 19, 35, 45) ein Magnetflussführungselement mit einem Ferrit-Polymer-Verbundwerkstoff umfasst, wobei die zusätzliche elektrisch leitfähige Materialschicht (13) direkt an das Magnetflussführungselement angeordnet wird.

9. Verfahren nach einem der vorangehenden Ansprüche, wobei die zusätzliche elektrisch leitfähige Materialschicht (13) von dem zumindest einen aktiven Teil (12, 19, 35, 45) und/oder von der elektrischen Maschine elektrisch isoliert ist.

10. Verfahren nach einem der vorherigen Ansprüche wobei die zusätzliche elektrisch leitfähige Materialschicht (13) eine Schichtdicke aufweist, so dass die zusätzliche elektrisch leitfähige Materialschicht (13), insbesondere ausschließlich, ein hochfrequentes intrinsisches Magnetfeld der Energieübertragungsvorrichtung schirmt und/oder bezüglich eines extrinsischen Magnetfelds der elektrischen Maschine keine Wirkung hat.

11. Induktive Energieübertragungsvorrichtung (100) zur kontaktlosen Umwandlung von elektrischer Energie in elektrische Energie mit Hilfe eines Magnetfelds, um einen Rotor einer elektrischen Maschine elektrisch zu erregen, wobei

an zumindest einen aktiven Teil (12, 19, 35, 45) der Energieübertragungsvorrichtung (100) eine zusätzliche elektrisch leitfähige Materialschicht (13) angeordnet ist, wobei ein aktiver Teil der Energieübertragungsvorrichtung (100) ein Teil der Energieübertragungsvorrichtung (100) ist, welcher zumindest teilweise dem zur Energieübertragung genutzten Magnetfeld ausgesetzt ist, und wobei die elektrische Leitfähigkeit der zusätzlichen Materialschicht (13) größer ist als die elektrische Leitfähigkeit des zumindest einen aktiven Teils (12, 19, 35, 45), **dadurch gekennzeichnet, dass** die angeordnete zusätzliche Materialschicht (13) eine Schichtdicke aufweist, welche in Abhängigkeit einer vorbestimmten Frequenz des zur Energieübertragung genutzten Magnetfelds gewählt ist.

12. Verwendung eines elektrisch leitfähigen Materials (13) in einer induktiven Energieübertragungsvorrichtung (100), mit der mit Hilfe eines Magnetfelds elektrische Energie kontaktlos in elektrische Energie umgewandelt wird, um einen Rotor einer elektrischen Maschine elektrisch zu erregen, wobei

das elektrisch leitfähige Material (13) als zusätzliche Materialschicht an zumindest einen aktiven Teil (12, 19, 35, 45) der Energieübertragungsvorrichtung (100) angeordnet wird, wobei ein aktiver Teil der Energieübertragungsvorrichtung (100) ein Teil der Energieübertragungsvorrichtung (100) ist, welcher zumindest teilweise dem zur Energieübertragung genutzten Magnetfeld ausgesetzt ist, und wobei die elektrische Leitfähigkeit des zusätzlich aufgebrachten elektrisch leitfähigen Materials (13) größer ist als die elektrische Leitfähigkeit des zumindest einen aktiven Teils (12, 19, 35, 45),

**dadurch gekennzeichnet, dass** die angeordnete zusätzliche Materialschicht (13) eine Schichtdicke aufweist, welche in Abhängigkeit einer vorbestimmten Frequenz des zur Energieübertragung genutzten Magnetfelds gewählt wird.

13. Verwendung nach Anspruch 12, wobei der aktive Teil der Energieübertragungsvorrichtung (100) zumindest ein Magnetflussführungselement (23, 25, 38) umfasst, welches zumindest teilweise aus einem Ferrit-Komposite ausgebildet ist.

**Claims**

1. Method for increasing efficiency of an inductive energy transmission device (100), with which electrical energy is converted contactlessly into electrical energy using a magnetic field, in order to electrically excite a rotor of an electrical machine, comprising the step of:

arranging an additional electrically conductive material layer (13) on at least one active part (12, 19, 35, 45) of the energy transmission device (100), wherein an active part of the energy transmission device (100) is a part of the energy transmission device (100) which is at least partially exposed to the magnetic field used for energy transmission, wherein the electrical conductivity of the additional material layer (13) is greater than the electrical conductivity of the at least one active part (12, 19, 35, 45),

**characterized in that** the arranged additional material layer (13) has a layer thickness which is selected depending on a predetermined frequency of the magnetic field used for energy transmission.

2. Method according to claim 1, wherein the at least one active part (12, 19, 35, 45) of the energy transmission device (100) is a constituent of a stationary primary side (50) and/or a rotatable secondary side (30) of the energy transmission device (100).

3. Method according to claim 1 or 2, wherein the at least one active part (12, 19, 35, 45) of the energy transmission device (100) comprises a shaft (12) and/or a heat sink (19) and/or a ferrite plate (23) and/or a housing (35) and/or a stator winding (40) and/or a rotor winding (27) and/or a ferrite disk (42) and/or a lid (45) of the energy transmission device (100).

4. Method according to any one of the preceding claims, wherein the layer thickness of the arranged additional material layer (13) corresponds to at least a penetration depth ($\delta$) due to the skin effect in the material of the additional material layer (13) at a predefined frequency of the magnetic field used for energy transmission, and wherein the layer thickness of the arranged additional material layer (13) is in particular at least twice the penetration depth ($\delta$) due to the skin effect in the material of the additional material layer (13) at a predefined frequency of the magnetic field used for energy transmission.

5. Method according to any one of the preceding claims, wherein the additional electrically conductive material layer (13) has a relative permeability $\mu_r$ of approximately 1.

6. Method according to any one of the preceding claims, wherein a surface of the arranged additional material layer (13) is polished.

7. Method according to any one of the preceding claims, wherein the application of the additional electrically conductive material layer (13) to the at least one active part (12, 19, 35, 45) of the energy transmission device (100) is effected by pressing and/or welding and/or shrinking and/or galvanizing.

8. Method according to any one of the preceding claims, wherein the at least one active part (12, 19, 35, 45) comprises a magnetic flux guide element having a ferrite-polymer composite material, wherein the additional electrically conductive material layer (13) is arranged directly on the magnetic flux guide element.

9. Method according to any one of the preceding claims, wherein the additional electrically conductive material layer (13) is electrically insulated from the at least one active part (12, 19, 35, 45) and/or from the electrical machine.

**10.** Method according to any one of the preceding claims, wherein the additional electrically conductive material layer (13) has a layer thickness such that the additional electrically conductive material layer (13) shields, in particular exclusively, a highfrequency intrinsic magnetic field of the energy transmission device and/or has no effect in relation to an extrinsic magnetic field of the electrical machine.

**11.** Inductive energy transmission device (100) for contactlessly converting electrical energy into electrical energy using a magnetic field, in order to electrically excite a rotor of an electrical machine, wherein

an additional electrically conductive material layer (13) is arranged on at least one active part (12, 19, 35, 45) of the energy transmission device (100), wherein an active part of the energy transmission device (100) is a part of the energy transmission device (100) which is at least partially exposed to the magnetic field used for energy transmission, and wherein the electrical conductivity of the additional material layer (13) is greater than the electrical conductivity of the at least one active part (12, 19, 35, 45), **characterized in that** the arranged additional material layer (13) has a layer thickness which is selected depending on a predetermined frequency of the magnetic field used for energy transmission.

**12.** Use of an electrically conductive material (13) in an inductive energy transmission device (100), with which electrical energy is converted contactlessly into electrical energy using a magnetic field, in order to electrically excite a rotor of an electrical machine, wherein

the electrically conductive material (13) is arranged as an additional material layer on at least one active part (12, 19, 35, 45) of the energy transmission device (100), wherein an active part of the energy transmission device (100) is a part of the energy transmission device (100) which is at least partially exposed to the magnetic field used for energy transmission, and wherein the electrical conductivity of the additionally applied electrically conductive material (13) is greater than the electrical conductivity of the at least one active part (12, 19, 35, 45), **characterized in that** the arranged additional material layer (13) has a layer thickness which is selected depending on a predetermined frequency of the magnetic field used for energy transmission.

**13.** Use according to claim 12, wherein the active part of the energy transmission device (100) comprises at least one magnetic flux guide element (23, 25, 38) which is formed at least partially of a ferrite composite.

**Revendications**

**1.** Procédé pour augmenter l'efficacité d'un dispositif de transfert d'énergie inductif (100), avec lequel de l'énergie électrique est convertie sans contact en énergie électrique à l'aide d'un champ magnétique, afin d'exciter électriquement un rotor d'une machine électrique, comprenant l'étape suivante :

l'agencement d'une couche de matériau électriquement conducteur supplémentaire (13) sur au moins une partie active (12, 19, 35, 45) du dispositif de transfert d'énergie (100), une partie active du dispositif de transfert d'énergie (100) étant une partie du dispositif de transfert d'énergie (100) qui est au moins partiellement exposée au champ magnétique utilisé pour le transfert d'énergie, la conductivité électrique de la couche de matériau supplémentaire (13) étant supérieure à la conductivité électrique de l'au moins une partie active (12, 19, 35, 45), **caractérisé en ce que** la couche de matériau supplémentaire (13) agencée présente une épaisseur de couche qui est choisie en fonction d'une fréquence prédéterminée du champ magnétique utilisé pour le transfert d'énergie.

**2.** Procédé selon la revendication 1, dans lequel l'au moins une partie active (12, 19, 35, 45) du dispositif de transfert d'énergie (100) est un constituant d'un côté primaire stationnaire (50) et/ou d'un côté secondaire rotatif (30) du dispositif de transfert d'énergie (100).

**3.** Procédé selon la revendication 1 ou 2, dans lequel l'au moins une partie active (12, 19, 35, 45) du dispositif de transfert d'énergie ( 100) comprend un arbre ( 12) et/ou un dissipateur thermique ( 19) et/ou une plaquette de ferrite (23) et/ou un boîtier (35) et/ou un enroulement de stator (40) et/ou un enroulement de rotor (27) et/ou un disque de ferrite (42) et/ou un couvercle (45) du dispositif de transfert d'énergie (100).

**4.** Procédé selon l'une quelconque des revendications précédentes, dans lequel l'épaisseur de couche de la couche de matériau supplémentaire (13) agencée correspond à au moins une profondeur de pénétration ($\delta$) due à l'effet de peau dans le matériau de la couche de matériau supplémentaire (13) pour une fréquence prédéfinie du champ magnétique utilisé pour le transfert d'énergie, et dans lequel l'épaisseur de couche de la couche de matériau supplémentaire (13) agencée est notamment au moins le double de la profondeur de pénétration ($\delta$) due à l'effet de peau dans le matériau de la couche de matériau supplémentaire (13) pour une fréquence prédéfinie du champ magnétique utilisé pour le transfert d'énergie.

5. Procédé selon l'une quelconque des revendications précédentes, dans lequel la couche de matériau électriquement conducteur supplémentaire (13) présente une perméabilité relative $\mu_r$ d'environ 1.

6. Procédé selon l'une quelconque des revendications précédentes, dans lequel une surface de la couche de matériau supplémentaire (13) agencée est polie.

7. Procédé selon l'une quelconque des revendications précédentes, dans lequel l'application de la couche de matériau supplémentaire électriquement conducteur ( 13) sur l'au moins une partie active (12, 19, 35, 45) du dispositif de transfert d'énergie (100) est effectuée par pressage et/ou soudage et/ou rétraction et/ou galvanisation.

8. Procédé selon l'une quelconque des revendications précédentes, dans lequel l'au moins une partie active (12, 19, 35, 45) comprend un élément de guidage de flux magnétique avec un matériau composite ferrite-polymère, dans lequel la couche de matériau électriquement conducteur supplémentaire (13) est agencée directement sur l'élément de guidage de flux magnétique.

9. Procédé selon l'une quelconque des revendications précédentes, dans lequel la couche de matériau électriquement conducteur supplémentaire (13) est électriquement isolée de l'au moins une partie active (12, 19, 35, 45) et/ou de la machine électrique.

10. Procédé selon l'une quelconque des revendications précédentes, dans lequel la couche de matériau électriquement conducteur supplémentaire (13) présente une épaisseur de couche telle que la couche de matériau électriquement conducteur supplémentaire (13) protège, notamment exclusivement, un champ magnétique intrinsèque à haute fréquence du dispositif de transfert d'énergie et/ou n'a aucun effet par rapport à un champ magnétique extrinsèque de la machine électrique.

11. Dispositif de transfert d'énergie inductif (100) pour la conversion sans contact d'énergie électrique en énergie électrique à l'aide d'un champ magnétique, afin d'exciter électriquement un rotor d'une machine électrique, dans lequel

   une couche de matériau électriquement conducteur supplémentaire (13) est agencée sur au moins une partie active (12, 19, 35, 45) du dispositif de transfert d'énergie (100), une partie active du dispositif de transfert d'énergie (100) étant une partie du dispositif de transfert d'énergie (100), qui est au moins partiellement exposée au champ magnétique utilisé pour le transfert d'énergie, et la conductivité électrique de la couche de matériau supplémentaire (13) étant supérieure à la conductivité électrique de l'au moins une partie active (12, 19, 35, 45), **caractérisé en ce que** la couche de matériau supplémentaire (13) agencée présente une épaisseur de couche qui est choisie en fonction d'une fréquence prédéterminée du champ magnétique utilisé pour le transfert d'énergie.

12. Utilisation d'un matériau électriquement conducteur (13) dans un dispositif de transfert d'énergie inductif (100), avec lequel de l'énergie électrique est convertie sans contact en énergie électrique à l'aide d'un champ magnétique, afin d'exciter électriquement un rotor d'une machine électrique,

   le matériau électriquement conducteur (13) étant agencé en tant que couche de matériau supplémentaire sur au moins une partie active (12, 19, 35, 45) du dispositif de transfert d'énergie (100), une partie active du dispositif de transfert d'énergie (100) étant une partie du dispositif de transfert d'énergie (100), qui est au moins partiellement exposée au champ magnétique utilisé pour le transfert d'énergie, et la conductivité électrique du matériau électriquement conducteur (13) appliqué en supplément étant supérieure à la conductivité électrique de l'au moins une partie active (12, 19, 35, 45), **caractérisée en ce que** la couche de matériau supplémentaire (13) agencée présente une épaisseur de couche qui est choisie en fonction d'une fréquence prédéterminée du champ magnétique utilisé pour le transfert d'énergie.

13. Utilisation selon la revendication 12, dans laquelle la partie active du dispositif de transfert d'énergie (100) comprend au moins un élément de guidage de flux magnétique (23, 25, 38) qui est formé au moins partiellement d'un composite de ferrite.

Fig. 1

EP 3 920 372 B1

Fig. 2

EP 3 920 372 B1

Fig. 3

45

43 (13)

42

41

40

38

37

35

50

Fig. 4a

Fig. 4b

Fig. 5a

Fig. 5b

Fig. 6

EP 3 920 372 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3331128 A1
- DE 20204584 U1
- DE 102017214766 A1
- US 2009273251 A1
- CN 110635576 A